# EUROPEAN PATENT SPECIFICATION

(11) **EP 4 173 417 B1**
(45) Date of publication and mention of the grant of the patent: **25.11.2026**
(21) Application number: 21739867.6
(22) Date of filing: 16.06.2021
(51) Int. Cl.: H04W 72/542, H04W 88/08, H04W 36/00, H04W 48/12

(54) **CELL MEASUREMENT IN PHYSICAL (PHY) LAYER AND MEDIUM ACCESS CONTROL (MAC) LAYER MOBILITY**
ZELLMESSUNG IN DER PHYSIKALISCHEN SCHICHT UND SCHICHTMOBILITÄT MIT MEDIENZUGANGSSTEUERUNG (MAC)
MESURE DE CELLULE DANS UNE MOBILITÉ DE COUCHE PHYSIQUE (PHY) ET DE COUCHE DE CONTRÔLE D'ACCÈS AU SUPPORT (MAC)

(30) Priority: 29.06.2020 US 202063045702 P; 01.07.2020 US 202063047073 P; 15.06.2021 US 202117348353
(43) Date of publication of application: 03.05.2023
(73) Proprietor: QUALCOMM INCORPORATED, San Diego, California 92121-1714 (US)
(72) Inventor: DAMNJANOVIC, Jelena, San Diego, California 92121-1714 (US); LI, Junyi, San Diego, California 92121-1714 (US); LUO, Tao, San Diego, California 92121-1714 (US); DAMNJANOVIC, Aleksandar, San Diego, California 92121-1714 (US)
(74) Representative: Bardehle Pagenberg Partnerschaft mbB Patentanwälte Rechtsanwälte
(86) International application number: PCT/US2021/037641
(87) International publication number: WO 2022/005751

(56) References cited:
- WO-A1-2018/017840
- WO-A1-2019/013543
- US-A1- 2018 279 182

## Description

### TECHNICAL FIELD

Aspects of the present disclosure relate to wireless communications, and more particularly, to mobility techniques that allow for dynamically updating a set of cells activated to serve a user equipment (UE) based on physical (PHY) layer or medium access control (MAC) layer measurements.

### BACKGROUND

Wireless communication systems are widely deployed to provide various telecommunication services such as telephony, video, data, messaging, broadcasts, etc. These wireless communication systems may employ multiple-access technologies capable of supporting communication with multiple users by sharing available system resources (for example, bandwidth, transmit power, etc.). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems, to name a few.

These multiple access technologies have been adopted in various telecommunication standards to provide a common protocol that enables different wireless devices to communicate on a municipal, national, regional, and even global level. New radio (for example, 5G NR) is an example of an emerging telecommunication standard. NR is a set of enhancements to the LTE mobile standard promulgated by 3GPP. NR is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL). To these ends, NR supports beamforming, multiple-input multiple-output (MIMO) antenna technology, and carrier aggregation.

However, as the demand for mobile broadband access continues to increase, there exists a need for further improvements in NR and LTE technology. Preferably, these improvements should be applicable to other multi-access technologies and the telecommunication standards that employ these technologies.

A control resource set (CORESET) for systems, such as an NR and LTE systems, may comprise one or more control resource (e.g., time and frequency resources) sets, configured for conveying PDCCH, within the system bandwidth. Within each CORESET, one or more search spaces (e.g., common search space (CSS), UE-specific search space (USS), etc.) may be defined for a given UE.
Document WO 2018/017840 A1 discloses multiple mobility sets which are maintained for nodes of radio networks. The sets comprise information such as: transmit and receive point identities; cell identities; beam identities; frequency channels; channel bandwidth; and black lists. The sets may be defined at different levels, such as network and physical (PHY) level. A network mobility set, e.g., a new-radio (NR) mobility set may, be determined by the gNB, the cell, the UE, or another device. Multiple radio access network nodes and UEs may exchange mobility set information to achieve a distributed mobility solution. A UE may monitor its orientation relative to a TRP, e.g., via use of an onboard MEMS gyroscope, and alter its beamforming parameters in response to changes in orientation and/or changes in TRP connection strength. Cell selection and reselection for beam based networks may use Single Frequency Network (SFN) broadcast of initial access signals without beam sweeping.
Document WO 2019/013543 A1 discloses a method comprising the steps of: receiving, from a terminal, measurement report information of a cell; determining, by a concentration node, a carrier aggregation configuration for a terminal by using a cell including one or more distribution nodes; determining, by the concentration node or distribution node, a secondary cell state of each of one or more secondary cells configured for the terminal, using the measurement report information and information on the amount of downlink data received from a core network entity; and transmitting, by the distribution node, information indicating the secondary cell state of the secondary cell to the terminal, wherein the concentration node is a logical node hosting an RRC layer, an SDAP layer, and a PDCP layer, the distribution node is a logical node hosting an RLC layer, an MAC layer, and a PHY layer, and the concentration node and one or more distribution nodes transmit or receive information via an F1 interface.
Document US 2018/279182 A1 discloses a UE which comprises: a memory comprising instructions; and one or more processors in communication with the memory, wherein the one or more processors execute the instructions to: wirelessly communicate with a source node, perform a handover from the source node to a target node using L2 signaling in response to a handover decision between the source node and the target node, and wirelessly communicate with the target node in response to the handover. A method implemented by a UE comprises: wirelessly communicating with a source node; performing a handover from the source node to a target node using L2 signaling and in response to a handover decision; and wirelessly communicating with the target node in response to the handover.

### SUMMARY

The invention is defined in independent claims. Dependent claims concern particular embodiments of the invention.

The systems, methods, and devices of the disclosure each have several innovative aspects, no single one of which is solely responsible for the desirable attributes.

One innovative aspect of the subject matter described in this disclosure can be implemented in a method for wireless communication by a user equipment (UE). The method generally includes receiving signaling configuring the UE with a set of cells that support physical (PHY) layer or medium access control (MAC) layer mobility signaling and with a measurement configuration for the set of cells, participating in a physical (PHY) layer or medium access control (MAC) layer measurement procedure with one or more cells in the set of cells, receiving PHY layer or MAC layer mobility signaling based on participating in the PHY layer or MAC layer measurement procedure, and updating a subset of activated cells for serving the UE based on the mobility signaling.

One innovative aspect of the subject matter described in this disclosure can be implemented in a method for wireless communication by a network entity. The method generally includes transmitting, to a user equipment (UE), a configuration identifying a set of cells that support physical (PHY) layer or medium access control (MAC) layer mobility signaling and a measurement configuration for the set of cells, participating in a physical (PHY) layer or medium access control (MAC) layer measurement procedure with the UE, and transmitting, to the UE, PHY layer or MAC layer mobility signaling to update a subset of the cells that are activated for serving the UE based on participating in the PHY layer or MAC layer measurement procedure with the UE.

Aspects of the present disclosure provide means for, apparatus, processors, and computer-readable mediums for performing the methods described herein.

To the accomplishment of the foregoing and related ends, the one or more aspects comprise the features hereinafter fully described and particularly pointed out in the claims. The following description and the appended drawings set forth in detail some illustrative features of the one or more aspects. These features are indicative, however, of but a few of the various ways in which the principles of various aspects may be employed.

### BRIEF DESCRIPTION OF THE DRAWINGS

Details of one or more implementations of the subject matter described in this disclosure are set forth in the accompanying drawings and the description below. However, the accompanying drawings illustrate only some typical aspects of this disclosure and are therefore not to be considered limiting of its scope, as defined by the appended claims.
**FIG. 1** shows an example wireless communication network in which some aspects of the present disclosure may be performed.
**FIG. 2** shows a block diagram illustrating an example base station (BS) and an example user equipment (UE) in accordance with some aspects of the present disclosure.
**FIG. 3A** illustrates an example of a frame format for a telecommunication system.
**FIG. 3B** illustrates how different synchronization signal blocks (SSBs) may be sent using different beams.
**FIG. 4** illustrates an example architecture in which aspects of the present disclosure may be practiced.
**FIGs. 5** and **6** illustrate example scenarios in which aspects of the present disclosure may be practiced.
**FIGs. 7A** and **7B** illustrate an example of UE mobility, in accordance with some aspects of the present disclosure.
**FIG. 8** illustrates an example of radio units that support multiple carriers, in accordance with some aspects of the present disclosure.
**FIG. 9** illustrates example operations for wireless communication by a user equipment (UE), in accordance with some aspects of the present disclosure.
**FIG. 10** illustrates example operations for wireless communication by a network entity, in accordance with some aspects of the present disclosure.
**FIG. 11** is a call flow diagram illustrating messages exchanged between a user equipment (UE) and network entities for participating in a downlink-based measurement procedure for activating cells in in L1/L2 mobility, in accordance with some aspects of the present disclosure.
**FIG. 12** is a call flow diagram illustrating messages exchanged between a user equipment (UE) and network entities for participating in an uplink-based measurement procedure for activating cells in L1/L2 mobility, in accordance with some aspects of the present disclosure.
**FIG. 13** illustrates example operations for wireless communication by a user equipment (UE), in accordance with some aspects of the present disclosure.
**FIG. 14** illustrates example operations for wireless communication by a network entity, in accordance with some aspects of the present disclosure.
**FIG. 15** illustrates a communications device that may include various components configured to perform operations for the techniques disclosed herein in accordance with aspects of the present disclosure.
**FIG. 16** illustrates a communications device that may include various components configured to perform operations for the techniques disclosed herein in accordance with aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure relate to wireless communications, and more particularly, to mobility techniques that allow for dynamically updating a set of cells activated to serve a user equipment (UE) based on physical (PHY) layer or medium access control (MAC) layer measurements. As will be described in greater detail below, the set of activated cells may be updated based on PHY layer (Layer1 or L1) or MAC layer (Layer2 or L2) signaling that indicates one or more cells to activate and/or de-activate.

The following description provides examples and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to, or other than, the various aspects of the disclosure set forth herein. It should be understood that any aspect of the disclosure disclosed herein may be embodied by one or more elements of a claim.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband, etc. Each frequency may support a single RAT in a given geographic area in order to avoid interference between wireless networks of different RATs. In some cases, a 5G NR RAT network may be deployed.

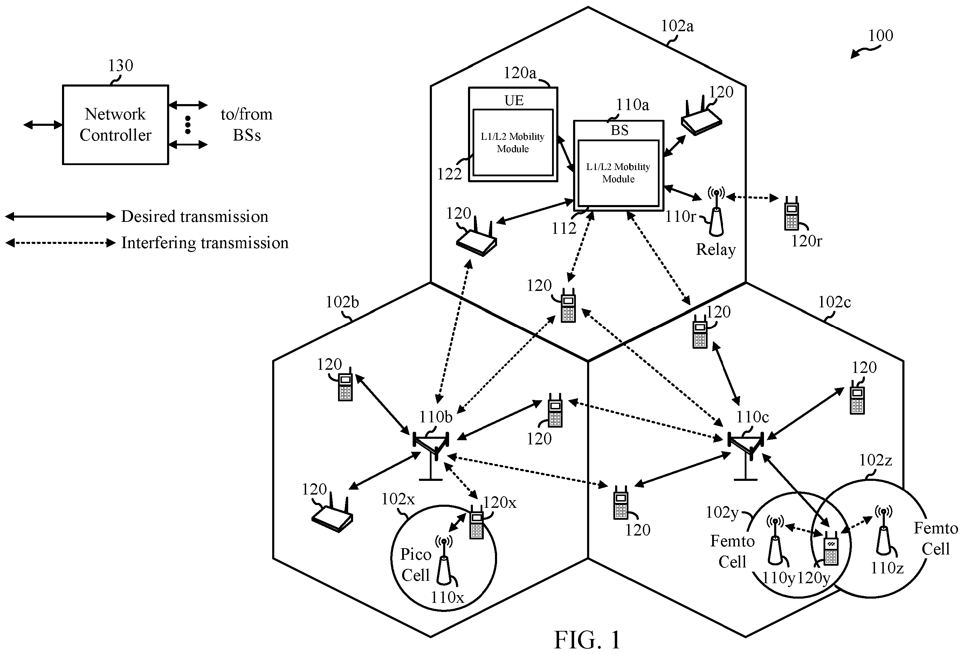

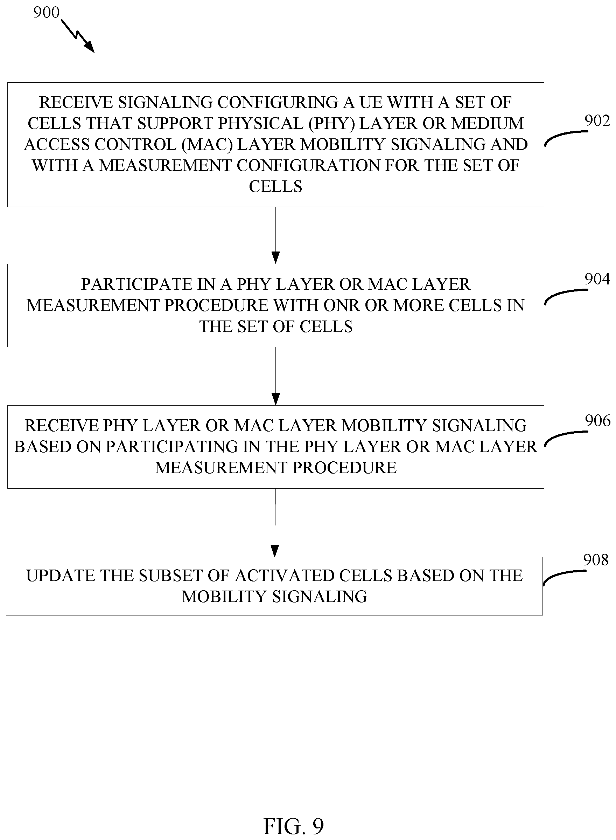

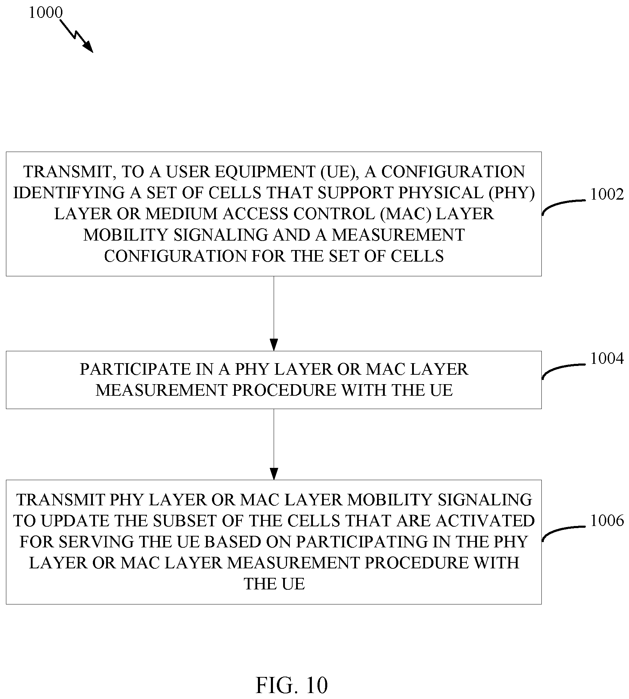

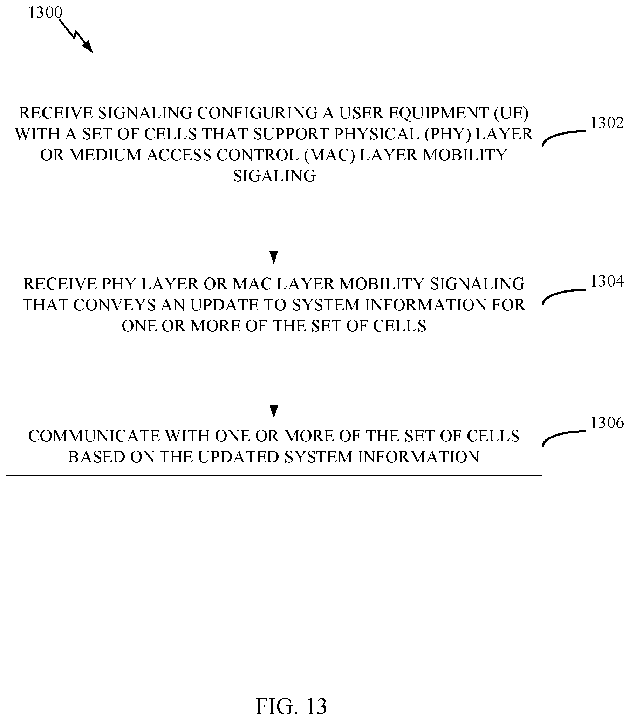

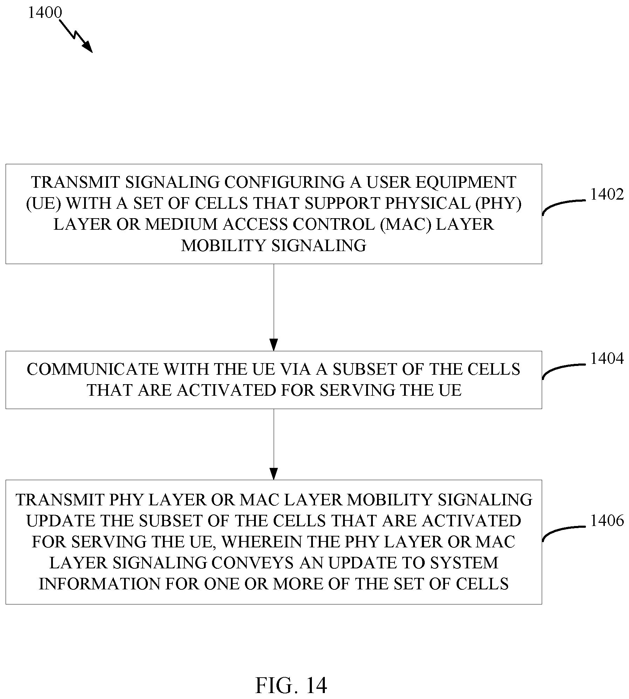

**FIG. 1** illustrates an example wireless communication network 100 in which aspects of the present disclosure may be performed. For example, as shown in FIG. 1, UE 120a may include an L1/L2 mobility module 122 that may be configured to perform (or cause UE 120a to perform) operations 900 of **FIG. 9** and/or operations 1300 of **FIG. 13**. Similarly, a BS 120a may include an L1/L2 mobility module 112 that may be configured to perform (or cause BS 110a to perform) operations 1000 of **FIG. 10** and/or operations 1400 of **FIG. 14****.**

NR access (for example, 5G NR) may support various wireless communication services, such as enhanced mobile broadband (eMBB) targeting wide bandwidth (for example, 80 MHz or beyond), millimeter wave (mmWave) targeting high carrier frequency (for example, 25 GHz or beyond), massive machine type communications MTC (mMTC) targeting non-backward compatible MTC techniques, or mission critical services targeting ultra-reliable low-latency communications (URLLC). These services may include latency and reliability requirements. These services may also have different transmission time intervals (TTI) to meet respective quality of service (QoS) requirements. In addition, these services may co-exist in the same time-domain resource (for example, a slot or subframe) or frequency-domain resource (for example, component carrier).

As illustrated in **FIG. 1****,** the wireless communication network 100 may include a number of base stations (BSs) 110a-z (each also individually referred to herein as BS 110 or collectively as BSs 110) and other network entities. A BS 110 may provide communication coverage for a particular geographic area, sometimes referred to as a "cell", which may be stationary or may move according to the location of a mobile BS 110. In some examples, the BSs 110 may be interconnected to one another or to one or more other BSs or network nodes (not shown) in wireless communication network 100 through various types of backhaul interfaces (for example, a direct physical connection, a wireless connection, a virtual network, or the like) using any suitable transport network. In the example shown in **FIG. 1****,** the BSs 110a, 110b and 110c may be macro BSs for the macro cells 102a, 102b and 102c, respectively. The BS 110x may be a pico BS for a pico cell 102x. The BSs 110y and 110z may be femto BSs for the femto cells 102y and 102z, respectively. A BS may support one or multiple cells. The BSs 110 communicate with user equipment (UEs) 120a-y (each also individually referred to herein as UE 120 or collectively as UEs 120) in the wireless communication network 100. The UEs 120 (for example, 120x, 120y, etc.) may be dispersed throughout the wireless communication network 100, and each UE 120 may be stationary or mobile.

Wireless communication network 100 may also include relay stations (for example, relay station 110r), also referred to as relays or the like, that receive a transmission of data or other information from an upstream station (for example, a BS 110a or a UE 120r) and sends a transmission of the data or other information to a downstream station (for example, a UE 120 or a BS 110), or that relays transmissions between UEs 120, to facilitate communication between devices.

A network controller 130 may couple to a set of BSs 110 and provide coordination and control for these BSs 110. The network controller 130 may communicate with the BSs 110 via a backhaul. The BSs 110 may also communicate with one another (for example, directly or indirectly) via wireless or wireline backhaul.

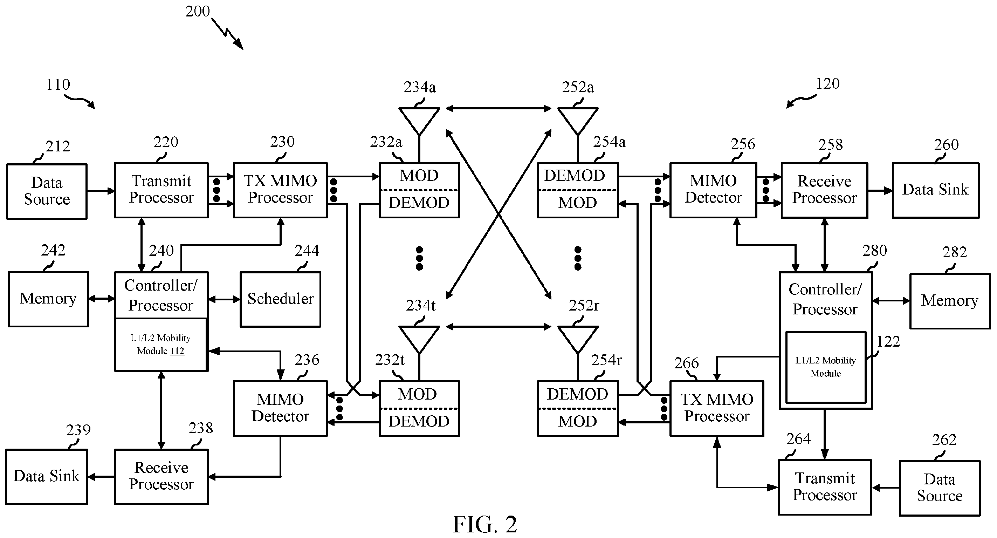

**FIG. 2** shows a block diagram illustrating an example base station (BS) and an example user equipment (UE) in accordance with some aspects of the present disclosure.

At the BS 110, a transmit processor 220 may receive data from a data source 212 and control information from a controller/processor 240. The control information may be for the physical broadcast channel (PBCH), physical control format indicator channel (PCFICH), physical hybrid ARQ indicator channel (PHICH), physical downlink control channel (PDCCH), group common PDCCH (GC PDCCH), etc. The data may be for the physical downlink shared channel (PDSCH), etc. The processor 220 may process (for example, encode and symbol map) the data and control information to obtain data symbols and control symbols, respectively. The transmit processor 220 may also generate reference symbols, such as for the primary synchronization signal (PSS), secondary synchronization signal (SSS), and cell-specific reference signal (CRS). A transmit (TX) multiple-input multiple-output (MIMO) processor 230 may perform spatial processing (for example, precoding) on the data symbols, the control symbols, or the reference symbols, if applicable, and may provide output symbol streams to the modulators (MODs) 232a-232t. Each modulator 232 may process a respective output symbol stream (for example, for OFDM, etc.) to obtain an output sample stream. Each modulator may further process (for example, convert to analog, amplify, filter, and upconvert) the output sample stream to obtain a downlink signal. Downlink signals from modulators 232a-232t may be transmitted via the antennas 234a-234t, respectively.

At the UE 120, the antennas 252a-252r may receive the downlink signals from the BS 110 and may provide received signals to the demodulators (DEMODs) in transceivers 254a-254r, respectively. Each demodulator 254 may condition (for example, filter, amplify, downconvert, and digitize) a respective received signal to obtain input samples. Each demodulator may further process the input samples (for example, for OFDM, etc.) to obtain received symbols. A MIMO detector 256 may obtain received symbols from all the demodulators 254a-254r, perform MIMO detection on the received symbols if applicable, and provide detected symbols. A receive processor 258 may process (for example, demodulate, deinterleave, and decode) the detected symbols, provide decoded data for the UE 120 to a data sink 260, and provide decoded control information to a controller/processor 280.

On the uplink, at UE 120, a transmit processor 264 may receive and process data (for example, for the physical uplink shared channel (PUSCH)) from a data source 262 and control information (for example, for the physical uplink control channel (PUCCH) from the controller/processor 280. The transmit processor 264 may also generate reference symbols for a reference signal (for example, for the sounding reference signal (SRS)). The symbols from the transmit processor 264 may be precoded by a TX MIMO processor 266 if applicable, further processed by the demodulators in transceivers 254a-254r (for example, for SC-FDM, etc.), and transmitted to the BS 110. At the BS 110, the uplink signals from the UE 120 may be received by the antennas 234, processed by the modulators 232, detected by a MIMO detector 236 if applicable, and further processed by a receive processor 238 to obtain decoded data and control information sent by the UE 120. The receive processor 238 may provide the decoded data to a data sink 239 and the decoded control information to the controller/processor 240.

The memories 242 and 282 may store data and program codes for BS 110 and UE 120, respectively. A scheduler 244 may schedule UEs for data transmission on the downlink or uplink.

The controller/processor 280 or other processors and modules at the UE 120 may perform or direct the execution of processes for the techniques described herein. As shown in **FIG. 2****,** the controller/processor 280 of the UE 120 has an L1/L2 mobility module 122 that may be configured to perform (or cause UE 120 to perform) operations 900 of **FIG. 9** and/or operations 1300 of **FIG. 13****.** Similarly, the BS 120a may include an L1/L2 mobility module 112 that may be configured to perform (or cause BS 110a to perform) operations 1000 of **FIG. 10** and/or operations 1400 of **FIG. 14****.**

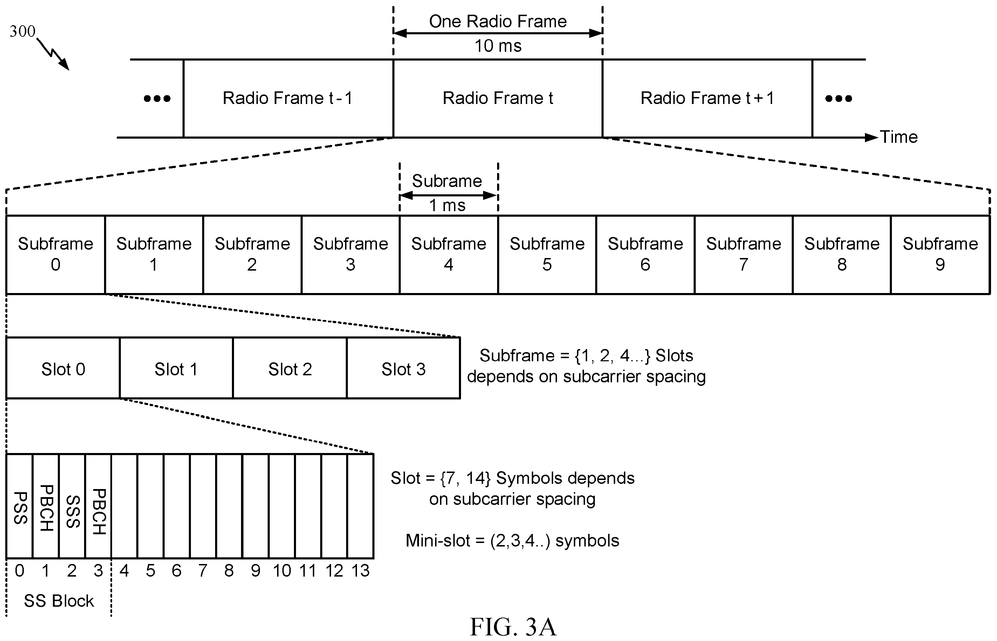

**FIG. 3A** is a diagram showing an example of a frame format 300 for NR. The transmission timeline for each of the downlink and uplink may be partitioned into units of radio frames. Each radio frame may have a predetermined duration (e.g., 10 ms) and may be partitioned into 10 subframes, each of 1 ms, with indices of 0 through 9. Each subframe may include a variable number of slots depending on the subcarrier spacing. Each slot may include a variable number of symbol periods (e.g., 7 or 14 symbols) depending on the subcarrier spacing. The symbol periods in each slot may be assigned indices. A mini-slot, which may be referred to as a sub-slot structure, refers to a transmit time interval having a duration less than a slot (e.g., 2, 3, or 4 symbols).

Each symbol in a slot may indicate a link direction (e.g., DL, UL, or flexible) for data transmission and the link direction for each subframe may be dynamically switched. The link directions may be based on the slot format. Each slot may include DL/UL data as well as DL/UL control information.

In NR, a synchronization signal (SS) block is transmitted. The SS block includes a PSS, a SSS, and a two symbol PBCH. The SS block can be transmitted in a fixed slot location, such as the symbols 0-3 as shown in **FIG. 3A**. The PSS and SSS may be used by UEs for cell search and acquisition. The PSS may provide half-frame timing, the SS may provide the CP length and frame timing. The PSS and SSS may provide the cell identity. The PBCH carries some basic system information, such as downlink system bandwidth, timing information within radio frame, SS burst set periodicity, system frame number, etc. The SS blocks may be organized into SS bursts to support beam sweeping. Further system information such as, remaining minimum system information (RMSI), system information blocks (SIBs), other system information (OSI) can be transmitted on a physical downlink shared channel (PDSCH) in certain subframes. The SS block can be transmitted up to sixty-four times, for example, with up to sixty-four different beam directions for mmW. The up to sixty-four transmissions of the SS block are referred to as the SS burst set. SS blocks in an SS burst set are transmitted in the same frequency region, while SS blocks in different SS bursts sets can be transmitted at different frequency locations.

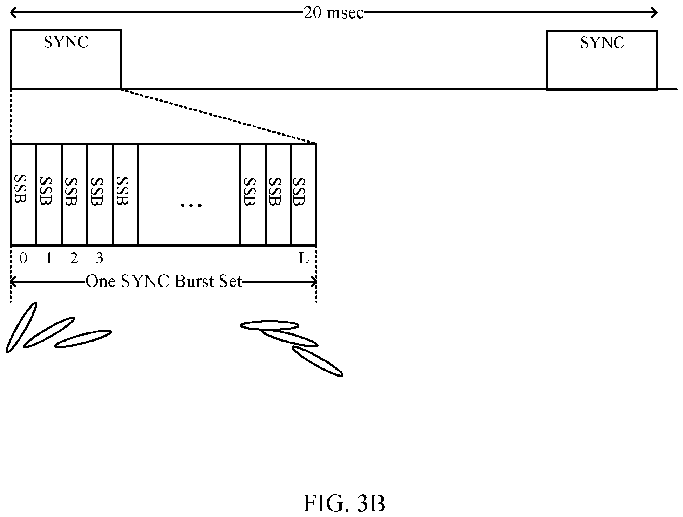

As shown in **FIG. 3B**, the SS blocks may be organized into SS burst sets to support beam sweeping. As shown, each SSB within a burst set may be transmitted using a different beam, which may help a UE quickly acquire both transmit (Tx) and receive (Rx) beams (particular for mmW applications). A physical cell identity (PCI) may still decoded from the PSS and SSS of the SSB.

A control resource set (CORESET) for systems, such as an NR and LTE systems, may comprise one or more control resource (e.g., time and frequency resources) sets, configured for conveying PDCCH, within the system bandwidth. Within each CORESET, one or more search spaces (e.g., common search space (CSS), UE-specific search space (USS), etc.) may be defined for a given UE. According to aspects of the present disclosure, a CORESET is a set of time and frequency domain resources, defined in units of resource element groups (REGs). Each REG may comprise a fixed number (e.g., twelve) tones in one symbol period (e.g., a symbol period of a slot), where one tone in one symbol period is referred to as a resource element (RE). A fixed number of REGs may be included in a control channel element (CCE). Sets of CCEs may be used to transmit new radio PDCCHs (NR-PDCCHs), with different numbers of CCEs in the sets used to transmit NR-PDCCHs using differing aggregation levels. Multiple sets of CCEs may be defined as search spaces for UEs, and thus a NodeB or other base station may transmit an NR-PDCCH to a UE by transmitting the NR-PDCCH in a set of CCEs that is defined as a decoding candidate within a search space for the UE, and the UE may receive the NR-PDCCH by searching in search spaces for the UE and decoding the NR-PDCCH transmitted by the NodeB.

### Example Methods for L1/L2 Mobility Active Set Management Based on L1/L2 Measurements

Aspects of the present disclosure relate to wireless communications, and more particularly, to mobility techniques that allow for dynamically updating a set of cells activated to serve a user equipment (UE) based on physical (PHY) layer or medium access control (MAC) layer measurements. As will be described in greater detail below, the set of activated cells may be updated based on PHY layer (Layer1 or L1) or MAC layer (Layer2 or L2) signaling that indicates one or more cells to activate and/or de-activate.

The techniques presented herein may be applied in various bands utilized for NR. For example, for the higher band referred to as FR4 (e.g., 52.6GHz - 114.25GHz), an OFDM waveform with very large subcarrier spacing (960kHz - 3.84MHz) is required to combat severe phase noise. Due to the large subcarrier spacing, the slot length tends to be very short. In a lower band referred to as FR2 (24.25 GHz to 52.6 GHz) with 120kHz SCS, the slot length is 125µSec, while in FR4 with 960kHz, the slot length is 15.6µSec.

In multi-beam operation (e.g., involving FR1 and FR2 bands), more efficient uplink/downlink beam management may allow for increased intra-cell and inter-cell mobility (e.g., L1 and/or L2-centric mobility) and/or a larger number of transmission configuration indicator (TCI) states. For example, the states may include the use of a common beam for data and control transmission and reception for UL and DL operations, a unified TCI framework for UL and DL beam indication, and enhanced signaling mechanisms to improve latency and efficiency (e.g., dynamic usage of control signaling).

The techniques presented herein provide signaling mechanisms that may help support such enhanced features, improve latency, and improve efficiency with more usage of dynamic control signaling. For example, the techniques described herein make use of physical layer (PHY, Layer1, or L1) or medium access control (MAC, Layer2 or L2) signaling, as opposed to higher layer (e.g., RRC) signaling.

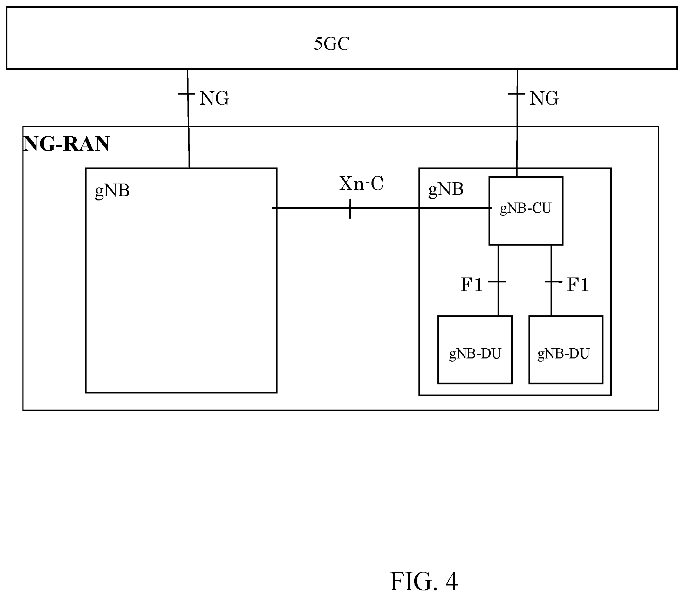

**FIG. 4** illustrates an example architecture in which aspects of the present disclosure may be practiced. As illustrated, the architecture includes a gNB Central Unit (gNB-CU). The gNB-CU generally serves as a logical node hosting RRC, Service Data Adaptation Protocol (SDAP) and PDCP protocols of the gNB that controls the operation of one or more gNB distributed units (gNB-DUs). As illustrated, the gNB-CU terminates an F1 interface connected with the gNB-DU.

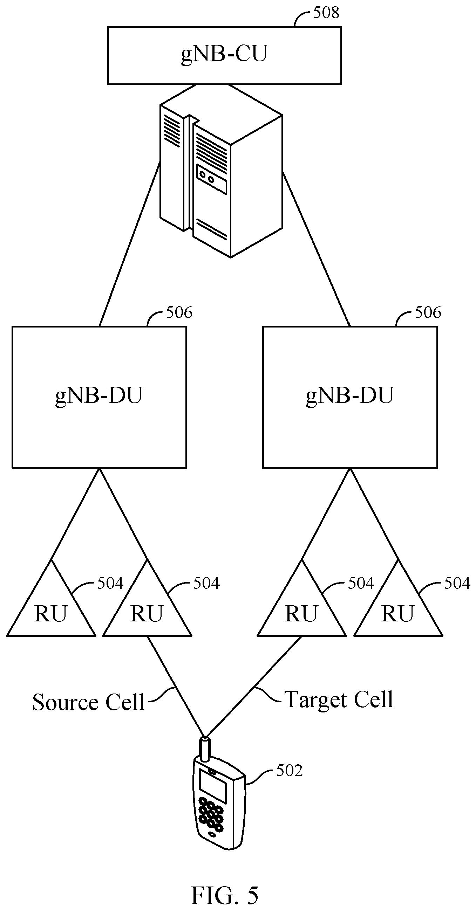

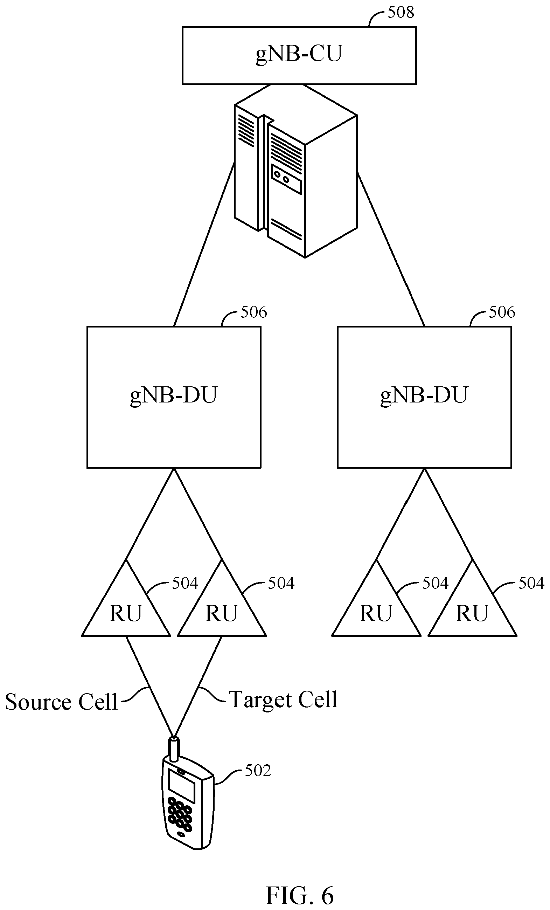

A gNB-DU generally serves as a logical node hosting RLC, MAC and PHY layers of the gNB, and its operation is controlled by gNB-CU. As illustrated in **FIGs. 5** and **6**, one gNB-DU supports one or multiple cells; however, each cell is supported by only one gNB-DU. The gNB-DU terminates the F1 interface connected with the gNB-CU.

**FIGs. 5** and **6** illustrate example scenarios in which aspects of the present disclosure may be practiced.

As illustrated in **FIG. 5**, in some cases, a UE 502 may be handed over between (source and target) cells supported by radio units, or RUs, 504 of different DUs 506 under the same CU 508. The RUs 504 generally contain only PHY layer logic. In the scenario illustrated in **FIG. 5**, the cells could have non-collocated (in different DUs) PHY, MAC, and RLC logic, but common PDCP and RRC logic (the same CU). While L1/L2 signaling techniques described herein may be used for mobility, the data path from PDCP to different RLCs present some control aspects that may be addressed by coordination between DUs.

In the scenario illustrated in **FIG. 6**, on the other hand, source and target cells are supported by (belong to) the same DU. Thus, L1/L2 mobility may be particularly attractive in this scenario, as the cells can share MAC and upper layers (same DU). In this scenario, when performing a handover via L1/L2 signaling, the data path at MAC and above stays the same.

As noted above, the distributed RUs contain only PHY layer and may be used (activated/de-activated) in a similar manner to carrier aggregation (CA), but cells may be on the same carrier frequencies. As such, aspects of the present disclosure, however, may utilize mechanisms similar to those used in CA to enable L1/L1 mobility (e.g., activating/de-activating cells).

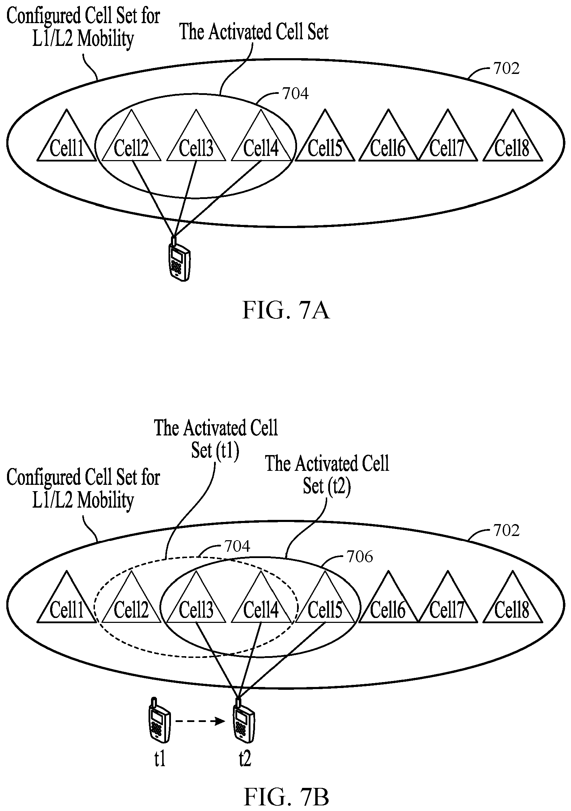

**FIG. 7** illustrates an example of UE mobility, in accordance with certain aspects of the present disclosure.

As noted above, as an initial step, RRC signaling may be used to configure a set of cells 702 for L1/L2 mobility. The example of **FIGs. 7A** assumes a configured set of 8 cells (Cells1-8). In general, the cell set may be designed to be large enough to cover meaningful mobility (e.g., anticipated mobility of a UE within a given area and given time). As will be described below, mobility management may be performed by activating/de-activating cells in the set.

From the configured set of cells 702, at any given time, a certain set of cells 704 may be activated. This activated cell set 704 generally refers to a group of cells in the configured set that are activated. Referring again to **FIG. 7A**, the activated cell set 704 includes Cells 2-4. Which cells are activated for any given UE may depend on UE reported measurements. Configured cells that are not activated (a deactivated cell set) may include the (remaining) group of cells in in the configured set 702 that are deactivated (not activated). In **FIG. 7A**, the deactivated cell set includes Cell1 and Cells5-8.

Aspects of the present disclosure may provide for seamless mobility within the activated cells in the activated cell set. In some cases, the signaling mechanism may be relatively similar to beam management. For example, mobility management within the activated set may be performed through L1/L2 signaling used to activate/deactivate cells in the activated and deactivated cell sets to select beams within the activated cells.

As illustrated in **FIG. 7B**, as the UE moves, cells from the configured set of cells 702 are deactivated and activated, for example, based on signal quality (measurements reported by the UE) and other considerations (e.g., loading of the cells). In the example shown in **FIG. 7B**, as the UE moves from left (at time t1) to right (at time t2), cell 5 (which is now closer) is activated and cell 2 (which is now farther) is de-activated. Thus, after the move, the new activated cell set 706 includes Cell3, Cell4, and Cell5, in contrast to the previous activated cell set 704 which includes Cell2, Cell3, and Cell4.

The cells that are activated/deactivated by L1/L2 signaling may be based on network control, UE recommendation, or UE decision. In general, the L1/L2 signaling (e.g., DCI and/or MAC-CEs) could carry activation and/or deactivation commands (e.g., that indicate cells to be activated and cells to be deactivated).

If a UE is capable of supporting only one activated cell at a time, an activation command indicating a new cell could implicitly deactivate a currently active cell (e.g. upon UE acknowledging the command).

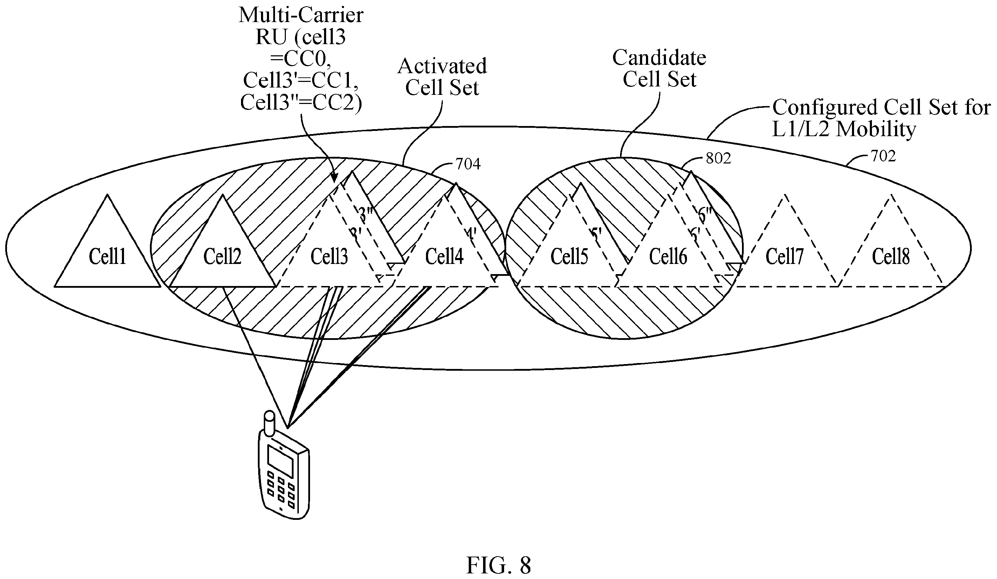

In some cases, one or more of the RUs may have multiple carrier support (with each carrier being a cell). In such cases, activation/deactivation of cells can be done in groups of carriers (cells). For example, referring to **FIG. 8****,** RUs for Cells3-6 assume RUs that support multiple carriers. In the illustrated example, the same RU supports Cell3 (on CCo), Cell3' (on CC1) and Cell3" (on CC2). In this example, all three of the cells may be activated, de-activated at the same time. Further, within the set of cells 702, a candidate cell set 802 may be configured. The cells in the candidate cell set 802 may include cells that may be selected as a primary cell for communications with the UE, as discussed herein.

Aspects of the present disclosure may provide for mobility within a set of cells using physical (PHY) layer or medium access control (MAC) layer signaling (e.g., L1 or L2 signaling) based on PHY layer or MAC layer measurement procedures.

**FIG. 9** illustrates example operations that may be performed by a UE to identify cells in a set of cells in L1/L2-based mobility based on PHY layer or MAC layer measurements, in accordance with certain aspects of the present disclosure. Operations 900 may be performed, for example, by a UE 120 illustrated in **FIG. 1****.**

Operations 900 begin, at 902, where the UE receives, from a network entity, signaling configuring a UE with a set of cells that support physical (PHY) layer or medium access control (MAC) layer mobility signaling and with a measurement configuration for the set of cells. In some aspects, the signaling configuring the UE with the set of cells that support PHY layer or MAC layer mobility signaling and the measurement configuration for the set of cells may be carried in radio resource control (RRC) signaling.

At 904, the UE participates in a PHY layer or MAC layer measurement procedure with one or more cells in the set of cells. As discussed in further detail below, the PHY or MAC layer measurement procedure may be based on downlink signaling received from the one or more cells in the set of cells or uplink signaling transmitted by the UE to the one or more cells in the set of cells. Where the UE participates in a PHY or MAC layer measurement procedure based on downlink signaling received from the one or more cells in the set of cells, the UE may transmit a measurement report to the one or more cells, which a network entity can use to determine which cells are to be activated or deactivated. Where the UE participates in a PHY or MAC layer measurement procedure based on uplink signaling, the UE may transmit one or more reference signals to the one or more cells, and the cells may perform measurements based on those reference signals and use the measurements to determine which cells are to be activated or deactivated.

At 906, the UE receives PHY layer or MAC layer mobility signaling based on participating in the PHY layer or MAC layer measurement procedure.

At 908, the UE updates the subset of activated cells based on the mobility signaling. Generally, in updating the subset of activated cells, the UE may add newly activated cells identified in the mobility signaling to the subset of activated cells and/or remove cells from the subset of activated cells based on an identification of one or more cells in the mobility signaling.

**FIG. 10** illustrates example operations 1000 that may be considered complementary to operations 900 of **FIG. 9**. For example, operations 900 may be performed by a network entity (e.g., a gNB DU/CU) to dynamically activate cells to support mobility for a UE (e.g., a UE performing operations 900 of FIG. 9).

As illustrated, operations 1000 begin, at 1002, where the network entity transmits, to a user equipment (UE), a configuration identifying a set of cells that support physical (PHY) or medium access control (MAC) layer mobility signaling and a measurement configuration for the set of cells. As discussed, this configuration may be transmitted to the UE via radio resource control (RRC) signaling.

At 1004, the network entity participates in a PHY layer or MAC layer measurement procedure with the UE.

At 1006, the network entity transmits, to the UE, PHY layer or MAC layer mobility signaling to update the subset of the set of cells that are activated for serving the UE based on participating in the PHY layer or MAC layer measurement procedure with the UE.

PHY layer or MAC layer-based mobility may be based on PHY layer or MAC layer measurements. As discussed above, the PHY layer or MAC layer measurements may be performed by the UE in a downlink-based procedure or by the cells in a configured set of cells in an uplink procedure.

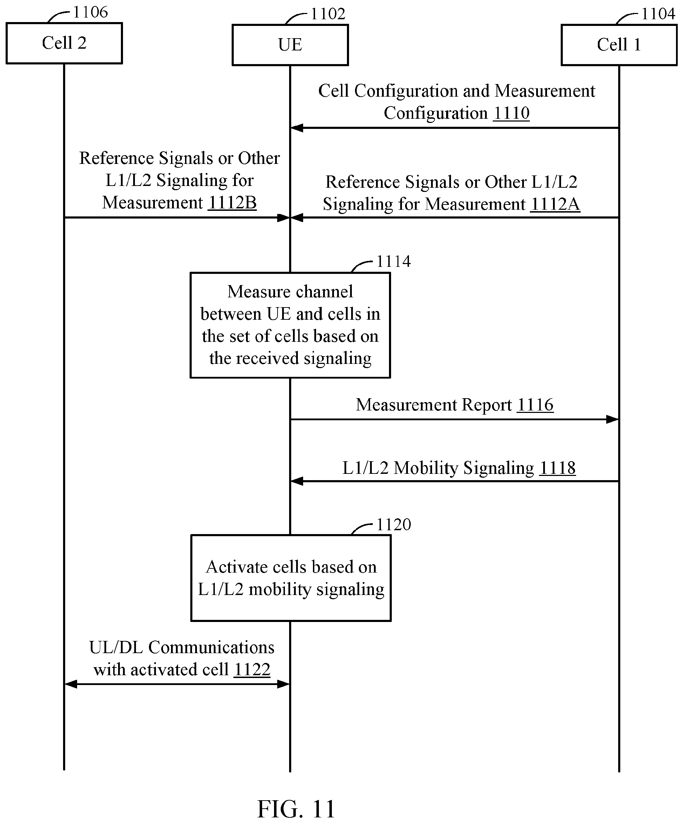

**FIG. 11** is a call flow diagram illustrating L1/L2-based mobility in which a UE 1102 receives mobility signaling based on performing a downlink-based PHY layer or MAC layer mobility procedure. As illustrated, a UE 1102 receives a configuration 1110 from at least one cell (e.g., cell 1 1104) identifying cells that support L1/L2 mobility signaling and a measurement configuration for the set of cells. The measurement configuration may include, for example, information identifying resources that the UE is to measure, resources on which the UE is to transmit a measurement report, and the like.

Subsequently, the UE may receive reference signals or other L1/L2 signaling 1112A and 1112B transmitted by the cells 1104 and 1106 (and other cells not illustrated in **FIG. 11**) in the set of cells. At 1104, the UE 1102 measures a channel between the UE 1102 and the cells 1104 and 1106 (and other cells included in the set of cells and not illustrated in **FIG. 11**). The UE 1102 then transmits a measurement report 1116 to at least one of the cells in the set of cells (e.g., a cell in the activated cell set that are configured to serve the UE). For example, the UE can transmit the measurement report 1116 to a designated primary cell in in the activated cell set.

In response, the UE 1102 receives, from cell 1104, L1/L2 mobility signaling 1118 (e.g., PHY layer or MAC layer mobility signaling) including information identifying one or more cells to add to the activated cell set. The L1/L2 mobility signaling 1118 may also include information identifying cells to deactivate and thus remove from the activated cell set. When the UE receives the L1/L2 mobility signaling 1118, the UE can add the identified one or more cells to the activated cell set and activate these cells at 1120. Subsequently, the UE and the identified cells can communicate 1122 using the timing advance associated with the appropriate cell and included in the L1/L2 mobility signaling.

In some aspects, the UE and the cells may participate in L1/L2-based mobility by performing an uplink-based PHY layer or MAC layer mobility procedure. In such a case, the UE may transmit reference signals to cells in the configured set of cells that support L1/L2-based mobility, and the cells can perform measurements and determine which cells to activate and/or deactivate for serving the UE. Uplink-based mobility procedures may provide power savings at the UE and free resources for reporting measurements to the cells. Further, uplink-based mobility procedures may allow for a network entity to perform joint beamforming such that the UE is aware of the joint beamforming. In some aspects, the measurements and monitoring of reference signals may be restricted to the configured set of cells for L1/L2 mobility, and other cells (e.g., cells outside of the configured set) need not monitor for uplink reference signals transmitted by the UE.

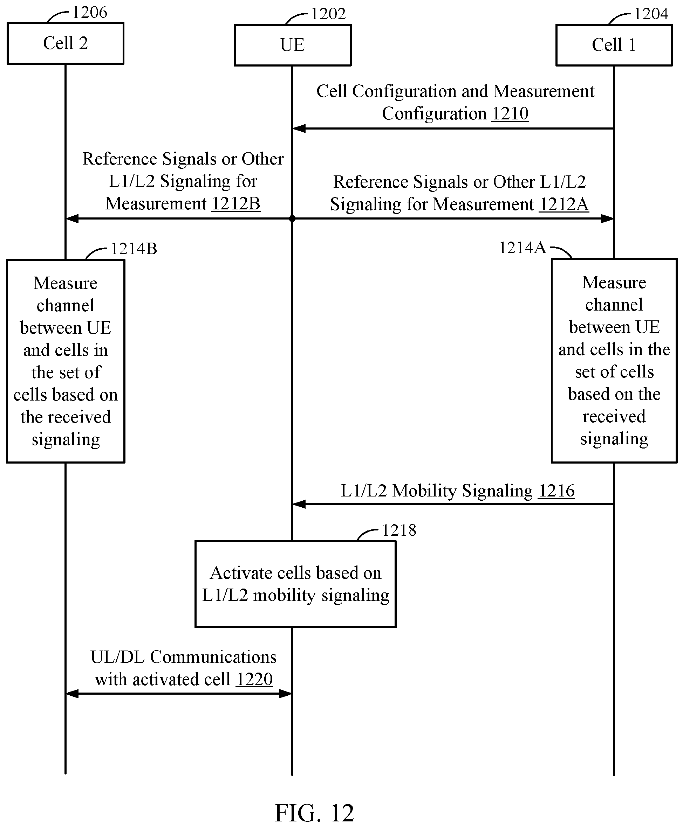

**FIG. 12** is a call flow diagram illustrating L1/L2-based mobility based on performing an uplink-based measurement procedure. As illustrated, the UE receives a configuration from at least one cell identifying cells that support L1/L2 mobility signaling and a measurement configuration for the set of cells. The measurement configuration may include, for example, information identifying resources that the UE can use to transmit reference signals to the one or more cells in the set of cells. Subsequently, the cells may perform measurements based on the uplink reference signals transmitted by the UE and determine which cells to activate and/or deactivate based on the measurements. Based on these measurements, at least one cell in the set of cells may transmit, to the UE, L1/L2 mobility signaling (e.g., PHY layer or MAC layer mobility signaling) including information identifying a cell to add to the activated cell set. The UE can subsequently add the identified cell to the activated cell set and perform uplink and downlink communications with the identified cell.

As discussed, for uplink-based measurement procedures, a UE may be configured with information identifying the resources on which reference signals (e.g., sounding reference signals (SRSs)) are to be transmitted. Cells in the configured set of cells may be configured to monitor for reference signals on the identified resources, measure the reference signals, and perform beam refinement.

In some aspects, the UE can transmit reference signals in multiple directions. For example, the reference signals may be transmitted omnidirectionally (e.g., in all directions). In some cases, the reference signals may be transmitted in a limited set of directions, which may be selected based on UE and/or network entity location information. The set of directions may be selected by the UE or signaled to the UE by a serving network entity and may, in some cases, account for UE orientation with respect to a serving network entity.

Generally, the measured channel from the configured cell set for L1/L2 mobility may be made available at a serving DU. The serving DU may make decisions about managing the set of activated cells, the set of deactivated cells, and the candidate set of cells that the UE can use in L1/L2-based mobility procedures, and L1/L2 signaling may be used to convey the decision to the UE.

### Example Methods for System Information Updates in L1/L2 Mobility

Aspects of the present disclosure may provide for mobility within a set of cells using physical (PHY) layer or medium access control (MAC) layer signaling (e.g., L1 or L2 signaling) and updating system information associated with cells in the set of cells.

**FIG. 13** illustrates example operations that may be performed by a UE to update system information for cells that support L1/L2-based mobility, in accordance with certain aspects of the present disclosure. Operations 900 may be performed, for example, by a UE 120 illustrated in **FIG. 1****.**

Operations 1300 begin, at 1302, where the UE receives signaling configuring the UE with a set of cells that support physical (PHY) layer or medium access control (MAC) layer mobility signaling. As discussed, this signaling may include radio resource control (RRC) signaling.

At 1304, the UE receives PHY layer or MAC layer mobility signaling that conveys an update to system information for one or more of the set of cells.

At 1306, the UE communicates with one or more of the set of cells based on the updated system information.

**FIG. 14** illustrates example operations 1400 that may be considered complementary to operations 1300 of **FIG. 13****.** For example, operations 1400 may be performed by a network entity (e.g., a gNB DU/CU) to dynamically activate cells, update system information, and to support mobility for a UE (e.g., a UE performing operations 1300 of **FIG. 9**).

As illustrated, operations 1400 begin, at 1402, where the network entity transmits, to a user equipment (UE), signaling configuring the UE with a set of cells that support physical (PHY) layer or medium access control (MAC) layer mobility signaling.

At 1404, the network entity communicates with the UE via a subset of the set of cells that are activated for serving the UE.

At 1406, the network entity transmits, to the UE, PHY layer or MAC layer mobility signaling to update the subset of the set of cells that are activated for serving the UE. The PHY layer or MAC layer signaling generally conveys an update to system information for one or more cells of the set of cells.

In some aspects, system information for all cells in a set of configured cells may be configured when the set of configured cells is configured. Over time, the system information for one or more cells in the set of configured cells may change, and such changes may be communicated to the UE via L1/L2 signaling or RRC signaling.

In some aspects, the configuration information may include a set of parameters that the network entity can signal to the UE via PHY or MAC layer signaling. For example, the configuration information may be transmitted as a set of key-value pairs, where the reception of a specific key from the network entity indicates that the associated value is to be used as system information parameters for a given cell. If system information changes include values from the preconfigured system information parameters, activation of the updated system information may be performed via PHY or MAC layer signaling. If, however, system information changes deviate from values included in the preconfigured system information parameters, updated system information may be transmitted to the UE via RRC signaling.

In some aspects, the configuration information may include discrete sets of parameters associated with a unique identifier. The network entity can signal an update to system information by indicating, in PHY or MAC layer signaling, one of the plurality of identifiers associated with a specific set of parameters for a given cell. Based on the signaled identifier, the UE can identify the system information parameters to apply for subsequent communications with a network entity.

Updates to system information parameters for a cell in a configured cell set may be conveyed to a UE at varying times. For example, updates to system information parameters may be transmitted to a UE when the system information is updated for one or more cells in the configured cell set, regardless of whether the cell is included in the activated cell set or the deactivated cell set. In some cases, updates to system information parameters may be conveyed to a UE when a cell is activated. Conveying updates to system information parameters for cells that are deactivated when such cells are activated may, for example, reduce an amount of communications overhead involved in updating system information parameters for cells in a configured set of cells as information that may not be relevant to a UE may not be transmitted until such information is relevant to the UE.

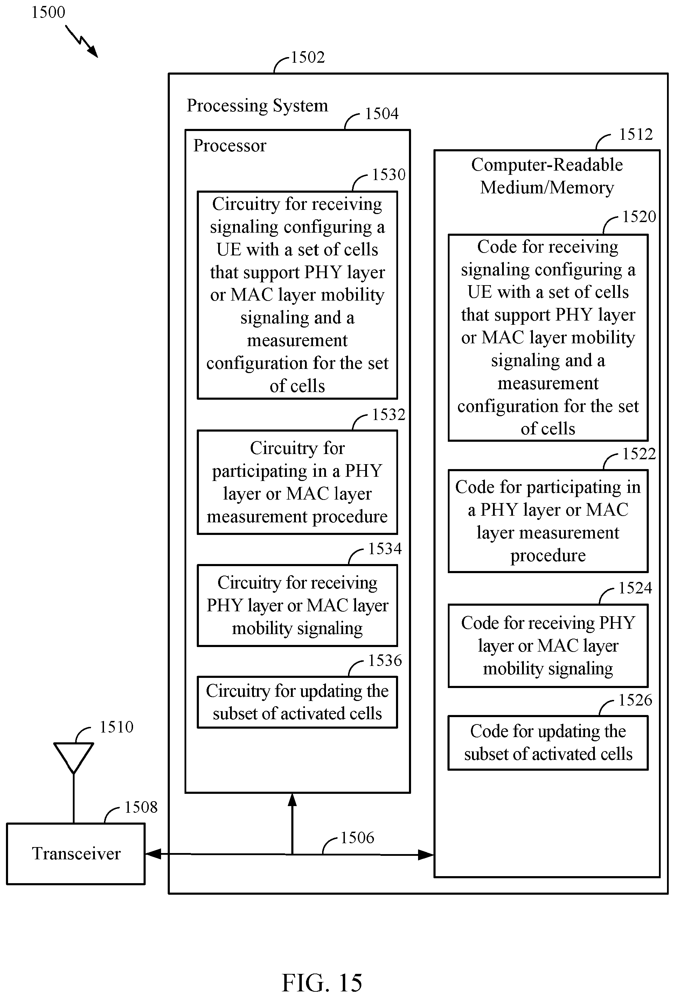

**FIG. 15** illustrates a communications device 1500 that may include various components (e.g., corresponding to means-plus-function components) configured to perform operations for the techniques disclosed herein, such as the operations illustrated in FIG. 9. The communications device 1500 includes a processing system 1502 coupled to a transceiver 1508. The transceiver 1508 is configured to transmit and receive signals for the communications device 1500 via an antenna 1510, such as the various signals as described herein. The processing system 1502 may be configured to perform processing functions for the communications device 1500, including processing signals received and/or to be transmitted by the communications device 1500.

The processing system 1502 includes a processor 1504 coupled to a computer-readable medium/memory 1512 via a bus 1506. In certain aspects, the computer-readable medium/memory 1512 is configured to store instructions (e.g., computer-executable code) that when executed by the processor 1504, cause the processor 1504 to perform the operations illustrated in **FIG. 9**, or other operations for performing the various techniques discussed herein for mobility within a set of cells using PHY layer or MAC layer signaling based on PHY layer or MAC layer measurement procedures. In certain aspects, computer-readable medium/memory 1512 stores code 1520 for receiving signaling configuring a UE with a set of cells supported that support PHY layer or MAC layer mobility signaling and a measurement configuration for the set of cells; code 1522 for participating in a PHY layer or MAC layer measurement procedure; code 1524 for receiving PHY layer or MAC layer mobility signaling; and code 1526 for updating the subset of activated cells. In certain aspects, the processor 1504 has circuitry configured to implement the code stored in the computer-readable medium/memory 1512. The processor 1504 includes circuitry 1530 for receiving signaling configuring a UE with a set of cells supported that support PHY layer or MAC layer mobility signaling and a measurement configuration for the set of cells; circuitry 1532 for participating in a PHY layer or MAC layer measurement procedure; circuitry 1534 for receiving PHY layer or MAC layer mobility signaling; and circuitry 1536 for updating the subset of activated cells.

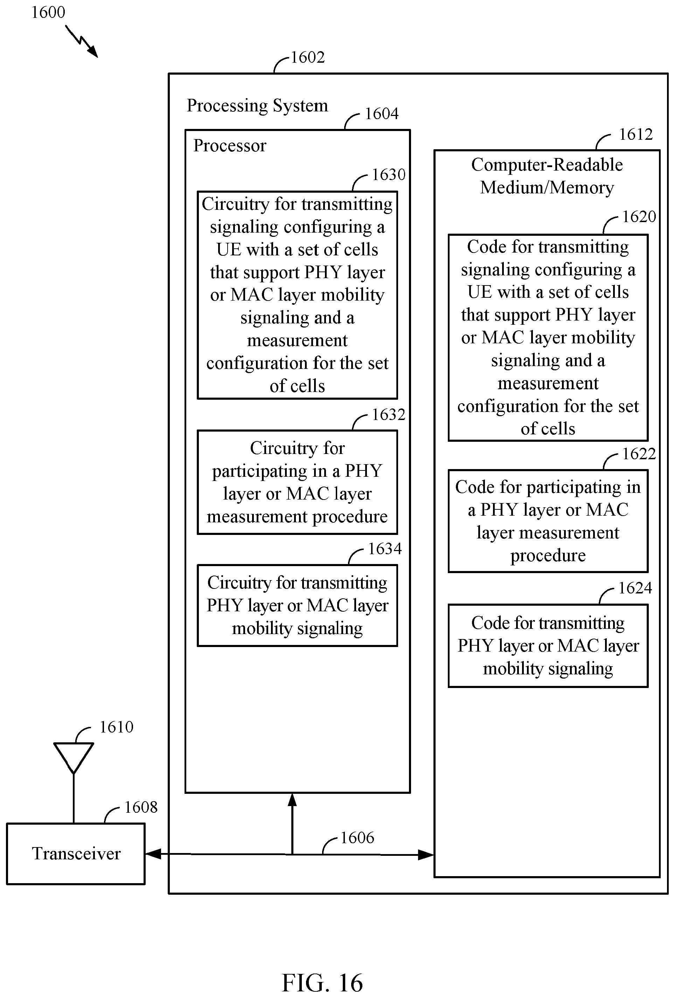

**FIG. 16** illustrates a communications device 1600 that may include various components (e.g., corresponding to means-plus-function components) configured to perform operations for the techniques disclosed herein, such as the operations illustrated in **FIG. 10**. The communications device 1600 includes a processing system 1602 coupled to a transceiver 1608. The transceiver 1608 is configured to transmit and receive signals for the communications device 1600 via an antenna 1610, such as the various signals as described herein. The processing system 1602 may be configured to perform processing functions for the communications device 1600, including processing signals received and/or to be transmitted by the communications device 1600.

The processing system 1602 includes a processor 1604 coupled to a computer-readable medium/memory 1612 via a bus 1606. In certain aspects, the computer-readable medium/memory 1612 is configured to store instructions (e.g., computer-executable code) that when executed by the processor 1604, cause the processor 1604 to perform the operations illustrated in **FIG. 10**, or other operations for performing the various techniques discussed herein for mobility within a set of cells using PHY layer or MAC layer signaling based on PHY layer or MAC layer measurement procedures. In certain aspects, computer-readable medium/memory 1612 stores code 1620 for transmitting signaling configuring a UE with a set of cells supported that support PHY layer or MAC layer mobility signaling and a measurement configuration for the set of cells; code 1622 for participating in a PHY layer or MAC layer measurement procedure; and code 1624 for transmitting PHY layer or MAC layer mobility signaling. In certain aspects, the processor 1604 has circuitry configured to implement the code stored in the computer-readable medium/memory 1612. The processor 1604 includes circuitry 1630 for transmitting signaling configuring a UE with a set of cells supported that support PHY layer or MAC layer mobility signaling and a measurement configuration for the set of cells; circuitry 1632 for participating in a PHY layer or MAC layer measurement procedure; and circuitry 1634 for transmitting PHY layer or MAC layer mobility signaling.

### Additional Considerations

The techniques described herein may be used for various wireless communication technologies, such as NR (for example, 5G NR), 3GPP Long Term Evolution (LTE), LTE-Advanced (LTE-A), code division multiple access (CDMA), time division multiple access (TDMA), frequency division multiple access (FDMA), orthogonal frequency division multiple access (OFDMA), single-carrier frequency division multiple access (SC-FDMA), time division synchronous code division multiple access (TD-SCDMA), and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). LTE and LTE-A are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). NR is an emerging wireless communications technology under development.

The techniques described herein may be used for the wireless networks and radio technologies mentioned above as well as other wireless networks and radio technologies. For clarity, while aspects may be described herein using terminology commonly associated with 3G, 4G, or 5G wireless technologies, aspects of the present disclosure can be applied in other generation-based communication systems.

In 3GPP, the term "cell" can refer to a coverage area of a Node B (NB) or a NB subsystem serving this coverage area, depending on the context in which the term is used. In NR systems, the term "cell" and BS, next generation NodeB (gNB or gNodeB), access point (AP), distributed unit (DU), carrier, or transmission reception point (TRP) may be used interchangeably. A BS may provide communication coverage for a macro cell, a pico cell, a femto cell, or other types of cells. A macro cell may cover a relatively large geographic area (for example, several kilometers in radius) and may allow unrestricted access by UEs with service subscription. A pico cell may cover a relatively small geographic area and may allow unrestricted access by UEs with service subscription. A femto cell may cover a relatively small geographic area (for example, a home) and may allow restricted access by UEs having an association with the femto cell (for example, UEs in a Closed Subscriber Group (CSG), UEs for users in the home, etc.). A BS for a macro cell may be referred to as a macro BS. A BS for a pico cell may be referred to as a pico BS. A BS for a femto cell may be referred to as a femto BS or a home BS.

A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet computer, a camera, a gaming device, a netbook, a smartbook, an ultrabook, an appliance, a medical device or medical equipment, a biometric sensor/device, a wearable device such as a smart watch, smart clothing, smart glasses, a smart wrist band, smart jewelry (for example, a smart ring, a smart bracelet, etc.), an entertainment device (for example, a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered machine-type communication (MTC) devices or evolved MTC (eMTC) devices. MTC and eMTC UEs include, for example, robots, drones, remote devices, sensors, meters, monitors, location tags, etc., that may communicate with a BS, another device (for example, remote device), or some other entity. A wireless node may provide, for example, connectivity for or to a network (for example, a wide area network such as Internet or a cellular network) via a wired or wireless communication link. Some UEs may be considered Internet-of-Things (IoT) devices, which may be narrowband IoT (NB-IoT) devices.

Some wireless networks (for example, LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a "resource block" (RB)) may be 12 subcarriers (or 180 kHz). Consequently, the nominal Fast Fourier Transfer (FFT) size may be equal to 128, 256, 512, 1024 or 2048 for system bandwidth of 1.25, 2.5, 5, 10, or 20 megahertz (MHz), respectively. The system bandwidth may also be partitioned into subbands. For example, a subband may cover 1.08 MHz (for example, 6 RBs), and there may be 1, 2, 4, 8, or 16 subbands for system bandwidth of 1.25, 2.5, 5, 10 or 20 MHz, respectively. In LTE, the basic transmission time interval (TTI) or packet duration is the 1 ms subframe.

NR may utilize OFDM with a CP on the uplink and downlink and include support for half-duplex operation using TDD. In NR, a subframe is still 1 ms, but the basic TTI is referred to as a slot. A subframe contains a variable number of slots (for example, 1, 2, 4, 8, 16, ... slots) depending on the subcarrier spacing. The NR RB is 12 consecutive frequency subcarriers. NR may support a base subcarrier spacing of 15 KHz and other subcarrier spacing may be defined with respect to the base subcarrier spacing, for example, 30 kHz, 60 kHz, 120 kHz, 240 kHz, etc. The symbol and slot lengths scale with the subcarrier spacing. The CP length also depends on the subcarrier spacing. Beamforming may be supported and beam direction may be dynamically configured. MIMO transmissions with precoding may also be supported. In some examples, MIMO configurations in the DL may support up to 8 transmit antennas with multi-layer DL transmissions up to 8 streams and up to 2 streams per UE. In some examples, multi-layer transmissions with up to 2 streams per UE may be supported. Aggregation of multiple cells may be supported with up to 8 serving cells.

In some examples, access to the air interface may be scheduled. A scheduling entity (for example, a BS) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. Base stations are not the only entities that may function as a scheduling entity. In some examples, a UE may function as a scheduling entity and may schedule resources for one or more subordinate entities (for example, one or more other UEs), and the other UEs may utilize the resources scheduled by the UE for wireless communication. In some examples, a UE may function as a scheduling entity in a peer-to-peer (P2P) network, or in a mesh network. In a mesh network example, UEs may communicate directly with one another in addition to communicating with a scheduling entity.

As used herein, the term "determining" may encompass one or more of a wide variety of actions. For example, "determining" may include calculating, computing, processing, deriving, investigating, looking up (for example, looking up in a table, a database or another data structure), assuming and the like. Also, "determining" may include receiving (for example, receiving information), accessing (for example, accessing data in a memory) and the like. Also, "determining" may include resolving, selecting, choosing, establishing and the like.

As used herein, "or" is used intended to be interpreted in the inclusive sense, unless otherwise explicitly indicated. For example, "a or b" may include a only, b only, or a combination of a and b. As used herein, a phrase referring to "at least one of" or "one or more of" a list of items refers to any combination of those items, including single members. For example, "at least one of: a, b, or c" is intended to cover the possibilities of: a only, b only, c only, a combination of a and b, a combination of a and c, a combination of b and c, and a combination of a and b and c.

The various illustrative components, logic, logical blocks, modules, circuits, operations and algorithm processes described in connection with the implementations disclosed herein may be implemented as electronic hardware, firmware, software, or combinations of hardware, firmware or software, including the structures disclosed in this specification and the structural equivalents thereof. The interchangeability of hardware, firmware and software has been described generally, in terms of functionality, and illustrated in the various illustrative components, blocks, modules, circuits and processes described above. Whether such functionality is implemented in hardware, firmware or software depends upon the particular application and design constraints imposed on the overall system.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one or more example processes in the form of a flowchart or flow diagram. However, other operations that are not depicted can be incorporated in the example processes that are schematically illustrated. For example, one or more additional operations can be performed before, after, simultaneously, or between any of the illustrated operations. In some circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

## Claims

1. A method for wireless communications by a user equipment, UE, comprising:
receiving (902) signaling configuring the UE with a set of cells that support physical, PHY, layer or medium access control, MAC, layer mobility signaling and with a measurement configuration for the set of cells that support PHY layer or MAC layer mobility signaling;
participating (904) in a physical, PHY, layer or medium access control, MAC, layer measurement procedure with one or more cells in the set of cells that support PHY layer or MAC layer mobility signaling;
receiving (906) PHY layer or MAC layer mobility signaling based on participating in the PHY layer or MAC layer measurement procedure;
updating (908) a subset of activated cells for serving the UE based on the mobility signaling;
receiving PHY layer or MAC layer mobility signaling that conveys an update to system information for one or more cells of the set of cells that support PHY layer or MAC layer mobility signaling; and
communicating with the one or more cells of the set of cells that support PHY layer or MAC layer mobility signaling based on the updated system information, wherein
updates to system information for a deactivated cell in the set of cells are received in PHY or MAC layer signaling when the deactivated cell is activated, or wherein the updated system information comprises system information for deactivated cells in the set of cells, and wherein the updated system information is received when the system information changes for one or more of the deactivated cells in the set of cells.

2. The method of claim 1, wherein the set of cells that support PHY layer or MAC layer mobility signaling are supported by one or more distributed units, DUs, under a common central unit, CU, and preferably wherein:
the one or more DUs comprises a common DU that supports each cell of the set of cells that support PHY layer or MAC layer mobility signaling.

3. The method of claim 1, wherein participating in the PHY layer or MAC layer measurement procedure comprises:
measuring a downlink signal received from the one or more cells in the set of cells that support PHY layer or MAC layer mobility signaling; and
reporting the measurement to a network entity, wherein the mobility signaling is received in response to reporting the measurement to the network entity, and
preferably wherein the downlink signal comprises one of a synchronization signal block, SSB, or a channel state information, CSI, reference signal, RS, CSI-RS.

4. The method of claim 1, wherein participating in the PHY layer or MAC layer measurement procedure comprises transmitting, to the one or more cells, reference signals for measurement, and preferably wherein the reference signals are transmitted in one or more directions based on a position or orientation of the UE relative to the one or more cells.

5. The method of claim 1, further comprising:
receiving radio resource control, RRC, signaling for the set of cells including system information for one or more cells in the set of cells that support PHY layer or MAC layer mobility signaling, and preferably wherein the configuration includes information identifying one or more parameters that a network entity can indicate via PHY or MAC layer mobility signaling, and further preferably wherein the parameters comprise a preconfigured set of values for one or more system information parameters that the network entity can indicate via PHY layer signaling or MAC layer signaling.

6. A method for wireless communications by a network entity, comprising:
transmitting (1002), to a user equipment, UE, a configuration identifying a set of cells that support physical, PHY, layer or medium access control, MAC, layer mobility signaling and a measurement configuration for the set of cells that support PHY layer or MAC layer mobility signaling;
participating (1004) in a physical, PHY, layer or medium access control, MAC, layer measurement procedure with the UE;
transmitting (1006), to the UE, PHY layer or MAC layer mobility signaling to update a subset of the cells that are activated for serving the UE based on participating in the PHY layer or MAC layer measurement procedure with the UE; and
communicating with the UE via the subset of the set of cells that support PHY layer or MAC layer mobility signaling that are activated for serving the UE, wherein the PHY layer or MAC layer mobility signaling conveys an update to system information for one or more of the set of cells, wherein updates to system information for a deactivated cell in the set of cells are transmitted in PHY or MAC layer signaling when the deactivated cell is activated, or wherein the updated system information comprises system information for deactivated cells in the set of cells, and wherein the updated system information is transmitted to the UE when the system information changes for one or more of the deactivated cells in the set of cells.

7. The method of claim 6, wherein participating in the PHY layer or MAC layer measurement procedure with the UE comprises:
transmitting one or more downlink signals to the UE; and
receiving, from the UE, PHY or MAC layer measurements based on the transmitted one or more downlink signals, or wherein participating in the PHY layer or MAC layer measurement procedure with the UE comprises:
receiving, from the UE, one or more reference signals; and
measuring a channel between the UE and the network entity based on the received one or more reference signals.

8. The method of claim 6, wherein the configuration includes information identifying one or more parameters that a network entity can indicate via PHY or MAC layer mobility signaling, and preferably wherein the parameters comprise a preconfigured set of values for one or more system information parameters that the network entity can indicate via PHY layer signaling or MAC layer signaling.

9. An apparatus for wireless communications by a user equipment, UE, comprising:
at least one processor and a memory configured to
receive (902) signaling configuring the UE with a set of cells that support physical, PHY, layer or medium access control, MAC, layer mobility signaling and with a measurement configuration for the set of cells that support PHY layer or MAC layer mobility signaling;
participate (904) in a physical, PHY, layer or medium access control, MAC, layer measurement procedure with one or more cells in the set of cells that support PHY layer or MAC layer mobility signaling;
receive (906) PHY layer or MAC layer mobility signaling based on participating in the PHY layer or MAC layer measurement procedure;
update (908) a subset of activated cells for serving the UE based on the mobility signaling;
receive PHY layer or MAC layer mobility signaling that conveys an update to system information for one or more cells of the set of cells that support PHY layer or MAC layer mobility signaling; and
communicate with the one or more cells of the set of cells that support PHY layer or MAC layer mobility signaling based on the updated system information, wherein
updates to system information for a deactivated cell in the set of cells are received in PHY or MAC layer signaling when the deactivated cell is activated, or wherein the updated system information comprises system information for deactivated cells in the set of cells, and wherein the updated system information is received when the system information changes for one or more of the deactivated cells in the set of cells.

10. An apparatus for wireless communications by a network entity, comprising:
at least one processor and a memory configured to:
transmit (1002), to a user equipment, UE, a configuration identifying a set of cells that support physical, PHY, layer or medium access control, MAC, layer mobility signaling and a measurement configuration for the set of cells that support PHY layer or MAC layer mobility signaling;
participate (1004) in a physical, PHY, layer or medium access control, MAC, layer measurement procedure with the UE;
transmit (1006), to the UE, PHY layer or MAC layer mobility signaling to update a subset of the cells that are activated for serving the UE based on participating in the PHY layer or MAC layer measurement procedure with the UE; and
communicate with the UE via the subset of the set of cells that support PHY layer or MAC layer mobility signaling that are activated for serving the UE, wherein the PHY layer or MAC layer mobility signaling conveys an update to system information for one or more of the set of cells, wherein updates to system information for a deactivated cell in the set of cells are transmitted in PHY or MAC layer signaling when the deactivated cell is activated, or wherein the updated system information comprises system information for deactivated cells in the set of cells, and wherein the updated system information is transmitted to the UE when the system information changes for one or more of the deactivated cells in the set of cells.

11. A computer program comprising instructions which, when the program is executed by a computer comprised at a user equipment, UE, cause the UE to carry out the method of any of claims 1 to 5 or, when the program is executed by a computer comprised at a network entity, cause the network entity to carry out the method of any of claims 6 to 8.

## Patentansprüche

1. Ein Verfahren für drahtlose Kommunikationen durch ein Benutzergerät, UE, umfassend:
Empfangen (902) von Signalisierung, die das UE mit einem Satz von Zellen konfiguriert, die physikalische, PHY, Schicht oder Medium Access Control, MAC, Schicht Mobilitätssignalisierung unterstützen und mit einer Messkonfiguration für den Satz von Zellen, die PHY Schicht oder MAC Schicht Mobilitätssignalisierung unterstützen;
Teilnehmen (904) an einer physikalischen, PHY, Schicht oder Medium Access Control, MAC, Schicht Messprozedur mit einer oder mehreren Zellen in dem Satz von Zellen, die PHY Schicht oder MAC Schicht Mobilitätssignalisierung unterstützen;
Empfangen (906) von PHY Schicht oder MAC Schicht Mobilitätssignalisierung basierend auf dem Teilnehmen an der PHY Schicht oder MAC Schicht Messprozedur;
Aktualisieren (908) eines Teilsatzes von aktivierten Zellen zum Bedienen des UE basierend auf der Mobilitätssignalisierung;
Empfangen von PHY Schicht oder MAC Schicht Mobilitätssignalisierung, die eine Aktualisierung von Systeminformation für eine oder mehrere Zellen des Satzes von Zellen übermittelt, die PHY Schicht oder MAC Schicht Mobilitätssignalisierung unterstützen; und
Kommunizieren mit der einen oder mehreren Zellen des Satzes von Zellen, die PHY Schicht oder MAC Schicht Mobilitätssignalisierung basierend auf der aktualisierten Systeminformation unterstützen, wobei Aktualisierungen von Systeminformation für eine deaktivierte Zelle in dem Satz von Zellen in PHY oder MAC Schicht Signalisierung empfangen werden, wenn die deaktivierte Zelle aktiviert ist, oder wobei die aktualisierte Systeminformation Systeminformation für deaktivierte Zellen in dem Satz von Zellen umfasst, und wobei die aktualisierte Systeminformation empfangen wird, wenn sich die Systeminformation für eine oder mehrere der deaktivierten Zellen in dem Satz von Zellen ändert.

2. Das Verfahren nach Anspruch 1, wobei der Satz von Zellen, die PHY Schicht oder MAC Schicht Mobilitätssignalisierung unterstützen, von einer oder mehreren verteilten Einheiten, DUs, unter einer gemeinsamen zentralen Einheit, CU, unterstützt werden, und wobei vorzugsweise:
die eine oder mehreren DUs eine gemeinsame DU umfassen, die jede Zelle des Satzes von Zellen unterstützt, die PHY Schicht oder MAC Schicht Mobilitätssignalisierung unterstützen.

3. Das Verfahren nach Anspruch 1, wobei das Teilnehmen an der PHY Schicht oder MAC Schicht Messprozedur umfasst:
Messen eines Downlink-Signals, das von der einen oder mehreren Zellen in dem Satz von Zellen empfangen wird, die PHY Schicht oder MAC Schicht Mobilitätssignalisierung unterstützen; und
Berichten der Messung an eine Netzwerkentität, wobei die Mobilitätssignalisierung als Reaktion auf das Berichten der Messung an die Netzwerkentität empfangen wird, und wobei vorzugsweise das Downlink-Signal eines von einem Synchronisationssignalblock, SSB, oder einem Kanalzustandsinformation, CSI, Referenzsignal, RS, CSI-RS, umfasst.

4. Das Verfahren nach Anspruch 1, wobei das Teilnehmen an der PHY Schicht oder MAC Schicht Messprozedur das Übertragen, an die eine oder mehreren Zellen, von Referenzsignalen zur Messung umfasst, und wobei vorzugsweise die Referenzsignale in einer oder mehreren Richtungen basierend auf einer Position oder Orientierung des UE relativ zu der einen oder mehreren Zellen übertragen werden.

5. Das Verfahren nach Anspruch 1, ferner umfassend:
Empfangen von Radio Resource Control, RRC, Signalisierung für den Satz von Zellen einschließlich Systeminformation für eine oder mehrere Zellen in dem Satz von Zellen, die PHY Schicht oder MAC Schicht Mobilitätssignalisierung unterstützen, und wobei vorzugsweise die Konfiguration Information beinhaltet, die einen oder mehrere Parameter identifiziert, die eine Netzwerkentität über PHY oder MAC Schicht Mobilitätssignalisierung anzeigen kann, und wobei ferner vorzugsweise die Parameter einen vorkonfigurierten Satz von Werten für einen oder mehrere Systeminformationsparameter umfassen, die die Netzwerkentität über PHY Schicht Signalisierung oder MAC Schicht Signalisierung anzeigen kann.

6. Ein Verfahren für drahtlose Kommunikationen durch eine Netzwerkentität, umfassend:
Übertragen (1002), an ein Benutzergerät, UE, einer Konfiguration, die einen Satz von Zellen identifiziert, die physikalische, PHY, Schicht oder Medium Access Control, MAC, Schicht Mobilitätssignalisierung unterstützen und eine Messkonfiguration für den Satz von Zellen, die PHY Schicht oder MAC Schicht Mobilitätssignalisierung unterstützen;
Teilnehmen (1004) an einer physikalischen, PHY, Schicht oder Medium Access Control, MAC, Schicht Messprozedur mit dem UE;
Übertragen (1006), an das UE, von PHY Schicht oder MAC Schicht Mobilitätssignalisierung zum Aktualisieren eines Teilsatzes der Zellen, die zum Bedienen des UE basierend auf dem Teilnehmen an der PHY Schicht oder MAC Schicht Messprozedur mit dem UE aktiviert sind; und
Kommunizieren mit dem UE über den Teilsatz des Satzes von Zellen, die PHY Schicht oder MAC Schicht Mobilitätssignalisierung unterstützen, die zum Bedienen des UE aktiviert sind, wobei die PHY Schicht oder MAC Schicht Mobilitätssignalisierung eine Aktualisierung von Systeminformation für eine oder mehrere des Satzes von Zellen übermittelt, wobei Aktualisierungen von Systeminformation für eine deaktivierte Zelle in dem Satz von Zellen in PHY oder MAC Schicht Signalisierung übertragen werden, wenn die deaktivierte Zelle aktiviert ist, oder wobei die aktualisierte Systeminformation Systeminformation für deaktivierte Zellen in dem Satz von Zellen umfasst, und wobei die aktualisierte Systeminformation an das UE übertragen wird, wenn sich die Systeminformation für eine oder mehrere der deaktivierten Zellen in dem Satz von Zellen ändert.

7. Das Verfahren nach Anspruch 6, wobei das Teilnehmen an der PHY Schicht oder MAC Schicht Messprozedur mit dem UE umfasst:
Übertragen eines oder mehrerer Downlink-Signale an das UE; und
Empfangen, von dem UE, von PHY oder MAC Schicht Messungen basierend auf dem übertragenen einen oder mehreren Downlink-Signalen, oder wobei das Teilnehmen an der PHY Schicht oder MAC Schicht Messprozedur mit dem UE umfasst:
Empfangen, von dem UE, eines oder mehrerer Referenzsignale; und
Messen eines Kanals zwischen dem UE und der Netzwerkentität basierend auf dem empfangenen einen oder mehreren Referenzsignalen.

8. Das Verfahren nach Anspruch 6, wobei die Konfiguration Information beinhaltet, die einen oder mehrere Parameter identifiziert, die eine Netzwerkentität über PHY oder MAC Schicht Mobilitätssignalisierung anzeigen kann, und wobei vorzugsweise die Parameter einen vorkonfigurierten Satz von Werten für einen oder mehrere Systeminformationsparameter umfassen, die die Netzwerkentität über PHY Schicht Signalisierung oder MAC Schicht Signalisierung anzeigen kann.

9. Eine Vorrichtung für drahtlose Kommunikationen durch ein Benutzergerät, UE, umfassend:
mindestens einen Prozessor und einen Speicher, konfiguriert zum Empfangen (902) von Signalisierung, die das UE mit einem Satz von Zellen konfiguriert, die physikalische, PHY, Schicht oder Medium Access Control, MAC, Schicht Mobilitätssignalisierung unterstützen und mit einer Messkonfiguration für den Satz von Zellen, die PHY Schicht oder MAC Schicht Mobilitätssignalisierung unterstützen;
Teilnehmen (904) an einer physikalischen, PHY, Schicht oder Medium Access Control, MAC, Schicht Messprozedur mit einer oder mehreren Zellen in dem Satz von Zellen, die PHY Schicht oder MAC Schicht Mobilitätssignalisierung unterstützen;
Empfangen (906) von PHY Schicht oder MAC Schicht Mobilitätssignalisierung basierend auf dem Teilnehmen an der PHY Schicht oder MAC Schicht Messprozedur;
Aktualisieren (908) eines Teilsatzes von aktivierten Zellen zum Bedienen des UE basierend auf der Mobilitätssignalisierung;
Empfangen von PHY Schicht oder MAC Schicht Mobilitätssignalisierung, die eine Aktualisierung von Systeminformation für eine oder mehrere Zellen des Satzes von Zellen übermittelt, die PHY Schicht oder MAC Schicht Mobilitätssignalisierung unterstützen; und
Kommunizieren mit der einen oder mehreren Zellen des Satzes von Zellen, die PHY Schicht oder MAC Schicht Mobilitätssignalisierung basierend auf der aktualisierten Systeminformation unterstützen, wobei Aktualisierungen von Systeminformation für eine deaktivierte Zelle in dem Satz von Zellen in PHY oder MAC Schicht Signalisierung empfangen werden, wenn die deaktivierte Zelle aktiviert ist, oder wobei die aktualisierte Systeminformation Systeminformation für deaktivierte Zellen in dem Satz von Zellen umfasst, und wobei die aktualisierte Systeminformation empfangen wird, wenn sich die Systeminformation für eine oder mehrere der deaktivierten Zellen in dem Satz von Zellen ändert.

10. Eine Vorrichtung für drahtlose Kommunikationen durch eine Netzwerkentität, umfassend:
mindestens einen Prozessor und einen Speicher, konfiguriert zum:
Übertragen (1002), an ein Benutzergerät, UE, einer Konfiguration, die einen Satz von Zellen identifiziert, die physikalische, PHY, Schicht oder Medium Access Control, MAC, Schicht Mobilitätssignalisierung unterstützen und eine Messkonfiguration für den Satz von Zellen, die PHY Schicht oder MAC Schicht Mobilitätssignalisierung unterstützen;
Teilnehmen (1004) an einer physikalischen, PHY, Schicht oder Medium Access Control, MAC, Schicht Messprozedur mit dem UE;
Übertragen (1006), an das UE, von PHY Schicht oder MAC Schicht Mobilitätssignalisierung zum Aktualisieren eines Teilsatzes der Zellen, die zum Bedienen des UE basierend auf dem Teilnehmen an der PHY Schicht oder MAC Schicht Messprozedur mit dem UE aktiviert sind; und
Kommunizieren mit dem UE über den Teilsatz des Satzes von Zellen, die PHY Schicht oder MAC Schicht Mobilitätssignalisierung unterstützen, die zum Bedienen des UE aktiviert sind, wobei die PHY Schicht oder MAC Schicht Mobilitätssignalisierung eine Aktualisierung von Systeminformation für eine oder mehrere des Satzes von Zellen übermittelt, wobei Aktualisierungen von Systeminformation für eine deaktivierte Zelle in dem Satz von Zellen in PHY oder MAC Schicht Signalisierung übertragen werden, wenn die deaktivierte Zelle aktiviert ist, oder wobei die aktualisierte Systeminformation Systeminformation für deaktivierte Zellen in dem Satz von Zellen umfasst, und wobei die aktualisierte Systeminformation an das UE übertragen wird, wenn sich die Systeminformation für eine oder mehrere der deaktivierten Zellen in dem Satz von Zellen ändert.

11. Ein Computerprogramm umfassend Anweisungen, die, wenn das Programm von einem Computer ausgeführt wird, der in einem Benutzergerät, UE, umfasst ist, das UE veranlassen, das Verfahren nach einem der Ansprüche 1 bis 5 auszuführen, oder, wenn das Programm von einem Computer ausgeführt wird, der in einer Netzwerkentität umfasst ist, die Netzwerkentität veranlassen, das Verfahren nach einem der Ansprüche 6 bis 8 auszuführen.

## Revendications

1. Un procédé de communication sans fil par un équipement utilisateur, UE, comprenant :
la réception (902) d'une signalisation configurant l'UE avec un ensemble de cellules qui prennent en charge une signalisation de mobilité de couche physique, PHY, ou de couche de contrôle d'accès au support, MAC, et avec une configuration de mesure pour l'ensemble de cellules qui prennent en charge la signalisation de mobilité de couche PHY ou de couche MAC ;
la participation (904) à une procédure de mesure de couche physique, PHY, ou de couche de contrôle d'accès au support, MAC, avec une ou plusieurs cellules dans l'ensemble de cellules qui prennent en charge la signalisation de mobilité de couche PHY ou de couche MAC ;
la réception (906) d'une signalisation de mobilité de couche PHY ou de couche MAC sur la base de la participation à la procédure de mesure de couche PHY ou de couche MAC ;
la mise à jour (908) d'un sous-ensemble de cellules activées pour desservir l'UE sur la base de la signalisation de mobilité ;
la réception d'une signalisation de mobilité de couche PHY ou de couche MAC qui transporte une mise à jour d'informations système pour une ou plusieurs cellules de l'ensemble de cellules qui prennent en charge la signalisation de mobilité de couche PHY ou de couche MAC ; et
la communication avec les une ou plusieurs cellules de l'ensemble de cellules qui prennent en charge la signalisation de mobilité de couche PHY ou de couche MAC sur la base des informations système mises à jour, dans lequel des mises à jour d'informations système pour une cellule désactivée dans l'ensemble de cellules sont reçues dans la signalisation de couche PHY ou MAC lorsque la cellule désactivée est activée, ou dans lequel les informations système mises à jour comprennent des informations système pour des cellules désactivées dans l'ensemble de cellules, et dans lequel les informations de système mises à jour sont reçues lorsque les informations de système changent pour une ou plusieurs des cellules désactivées dans l'ensemble de cellules.

2. Le procédé selon la revendication 1, dans lequel l'ensemble de cellules qui prennent en charge la signalisation de mobilité de couche PHY ou de couche MAC sont prises en charge par une ou plusieurs unités distribuées, DU, sous une unité centrale, CU, commune, et de préférence dans lequel :
les une ou plusieurs DU comprennent une DU commune qui prend en charge chaque cellule de l'ensemble de cellules qui prennent en charge la signalisation de mobilité de couche PHY ou de couche MAC.

3. Le procédé selon la revendication 1, dans lequel la participation à la procédure de mesure de couche PHY ou de couche MAC comprend :
la mesure d'un signal de liaison descendante reçu à partir des une ou plusieurs cellules dans l'ensemble de cellules qui prennent en charge la signalisation de mobilité de couche PHY ou de couche MAC ; et
le rapport de la mesure à une entité de réseau, dans lequel la signalisation de mobilité est reçue en réponse au rapport de la mesure à l'entité de réseau, et
en particulier dans lequel le signal de liaison descendante comprend un parmi un bloc de signal de synchronisation, SSB, ou un signal de référence, RS, d'information d'état de canal, CSI, CSI-RS.

4. Le procédé selon la revendication 1, dans lequel la participation à la procédure de mesure de couche PHY ou de couche MAC comprend la transmission, aux une ou plusieurs cellules, de signaux de référence pour la mesure, et de préférence dans lequel les signaux de référence sont transmis dans une ou plusieurs directions sur la base d'une position ou d'une orientation de l'UE par rapport aux une ou plusieurs cellules.

5. Le procédé selon la revendication 1, comprenant en outre :
la réception d'une signalisation de contrôle de ressources radio, RRC, pour l'ensemble de cellules incluant des informations système pour une ou plusieurs cellules dans l'ensemble de cellules qui prennent en charge la signalisation de mobilité de couche PHY ou de couche MAC, et de préférence dans lequel la configuration inclut des informations identifiant un ou plusieurs paramètres qu'une entité de réseau peut indiquer via la signalisation de mobilité de couche PHY ou MAC, et en outre de préférence dans lequel les paramètres comprennent un ensemble préconfiguré de valeurs pour un ou plusieurs paramètres d'information système que l'entité réseau peut indiquer via une signalisation de couche PHY ou une signalisation de couche MAC.

6. Un procédé de communication sans fil par une entité de réseau, comprenant :
la transmission (1002), à un équipement utilisateur, UE, d'une configuration identifiant un ensemble de cellules qui prennent en charge une signalisation de mobilité de couche physique, PHY, ou de couche de contrôle d'accès au support, MAC, et une configuration de mesure pour l'ensemble de cellules qui prennent en charge la signalisation de mobilité de couche PHY ou de couche MAC ;
la participation (1004) à une procédure de mesure de couche physique, PHY, ou de couche de contrôle d'accès au support, MAC, avec l'UE ;
la transmission (1006), à l'UE, de la signalisation de mobilité de couche PHY ou de couche MAC pour mettre à jour un sous-ensemble des cellules qui sont activées pour desservir l'UE sur la base de la participation à la procédure de mesure de couche PHY ou de couche MAC avec l'UE ; et
la communication avec l'UE via le sous-ensemble de l'ensemble de cellules qui prennent en charge la signalisation de mobilité de couche PHY ou de couche MAC qui sont activées pour desservir l'UE, dans lequel la signalisation de mobilité de couche PHY ou de couche MAC transporte une mise à jour d'informations système pour une ou plusieurs de l'ensemble de cellules, dans lequel des mises à jour d'informations système pour une cellule désactivée dans l'ensemble de cellules sont transmises dans la signalisation de couche PHY ou MAC lorsque la cellule désactivée est activée, ou dans lequel les informations système mises à jour comprennent des informations de système pour des cellules désactivées dans l'ensemble de cellules, et dans lequel les informations de système mises à jour sont transmises à l'UE lorsque les informations système changent pour une ou plusieurs des cellules désactivées dans l'ensemble de cellules.

7. Le procédé selon la revendication 6, dans lequel la participation à la procédure de mesure de couche PHY ou de couche MAC avec l'UE comprend :
la transmission d'un ou plusieurs signaux de liaison descendante à l'UE ; et
la réception, à partir de l'UE, de mesures de couche PHY ou MAC sur la base des un ou plusieurs signaux de liaison descendante transmis, ou dans lequel la participation à la procédure de mesure de couche PHY ou de couche MAC avec l'UE comprend :
la réception, à partir de l'UE, d'un ou plusieurs signaux de référence ; et
la mesure d'un canal entre l'UE et l'entité de réseau sur la base des un ou plusieurs signaux de référence reçus.

8. Le procédé selon la revendication 6, dans lequel la configuration inclut des informations identifiant un ou plusieurs paramètres qu'une entité réseau peut indiquer via une signalisation de mobilité de couche PHY ou MAC, et de préférence dans lequel les paramètres comprennent un ensemble préconfiguré de valeurs pour un ou plusieurs paramètres d'informations système que l'entité réseau peut indiquer via une signalisation de couche PHY ou une signalisation de couche MAC.

9. Un appareil pour la communication sans fil par un équipement utilisateur, UE, comprenant :
au moins un processeur et une mémoire configurés pour :
recevoir (902) une signalisation configurant l'UE avec un ensemble de cellules qui prennent en charge une signalisation de mobilité de couche physique, PHY, ou de couche de contrôle d'accès au support, MAC, et avec une configuration de mesure pour l'ensemble de cellules qui prennent en charge la signalisation de mobilité de couche PHY ou de couche MAC ;
participer (904) à une procédure de mesure de couche physique, PHY, ou de couche de contrôle d'accès au support, MAC, avec une ou plusieurs cellules dans l'ensemble de cellules qui prennent en charge la signalisation de mobilité de couche PHY ou de couche MAC ;
recevoir (906) une signalisation de mobilité de couche PHY ou de couche MAC sur la base de la participation à la procédure de mesure de couche PHY ou de couche MAC ;
mettre à jour (908) un sous-ensemble de cellules activées pour desservir l'UE sur la base de la signalisation de mobilité ;
recevoir une signalisation de mobilité de couche PHY ou de couche MAC qui transporte une mise à jour d'informations système pour une ou plusieurs cellules de l'ensemble de cellules qui prennent en charge la signalisation de mobilité de couche PHY ou de couche MAC ; et
communiquer avec les une ou plusieurs cellules de l'ensemble de cellules qui prennent en charge la signalisation de mobilité de couche PHY ou de couche MAC sur la base des informations système mises à jour, dans lequel des mises à jour d'informations système pour une cellule désactivée dans l'ensemble de cellules sont reçues dans la signalisation de couche PHY ou MAC lorsque la cellule désactivée est activée, ou dans lequel les informations système mises à jour comprennent des informations système pour des cellules désactivées dans l'ensemble de cellules, et dans lequel les informations de système mises à jour sont reçues lorsque les informations système changent pour une ou plusieurs des cellules désactivées dans l'ensemble de cellules.

10. Un appareil pour la communication sans fil par une entité de réseau, comprenant :
au moins un processeur et une mémoire configurés pour :
transmettre (1002), à un équipement utilisateur, UE, une configuration identifiant un ensemble de cellules qui prennent en charge une signalisation de mobilité de couche physique, PHY, ou de couche de contrôle d'accès au support, MAC, et une configuration de mesure pour l'ensemble de cellules qui prennent en charge la signalisation de mobilité de couche PHY ou de couche MAC ;
participer (1004) à une procédure de mesure de couche physique, PHY, ou de couche de contrôle d'accès au support, MAC, avec l'UE ;
transmettre (1006), à l'UE, la signalisation de mobilité de couche PHY ou de couche MAC pour mettre à jour un sous-ensemble des cellules qui sont activées pour desservir l'UE sur la base de la participation à la procédure de mesure de couche PHY ou de couche MAC avec l'UE ; et
communiquer avec l'UE via le sous-ensemble de l'ensemble de cellules qui prennent en charge la signalisation de mobilité de couche PHY ou de couche MAC qui sont activées pour desservir l'UE, dans lequel la signalisation de mobilité de couche PHY ou de couche MAC transporte une mise à jour d'informations système pour une ou plusieurs de l'ensemble de cellules, dans lequel des mises à jour d'informations système pour une cellule désactivée dans l'ensemble de cellules sont transmises dans la signalisation de couche PHY ou MAC lorsque la cellule désactivée est activée, ou dans lequel les informations système mises à jour comprennent des informations système pour des cellules désactivées dans l'ensemble de cellules, et dans lequel les informations système mises à jour sont transmises à l'UE lorsque les informations système changent pour une ou plusieurs des cellules désactivées dans l'ensemble de cellules.

11. Un programme de calculateur comprenant des instructions qui, lorsque le programme est exécuté par un calculateur inclus dans un équipement utilisateur, UE, amènent le calculateur à réaliser le procédé selon l'une des revendications 1 à 5, ou lorsque le programme est exécuté par un calculateur inclus dans une entité de réseau, amènent l'entité de réseau à réaliser le procédé selon l'une des revendications 6 à 8.
